# EUROPEAN PATENT SPECIFICATION

(11) **EP 2 421 137 B1**
(45) Date of publication and mention of the grant of the patent: **08.05.2019**
(21) Application number: 10764346.2
(22) Date of filing: 26.03.2010
(51) Int. Cl.: H02M 3/28, H02M 3/155

(54) **SWITCHING POWER SUPPLY UNIT**
SCHALTNETZTEILEINHEIT
UNITÉ D'ALIMENTATION ÉLECTRIQUE À COMMUTATION

(30) Priority: 14.04.2009 JP 2009098183
(43) Date of publication of application: 22.02.2012
(73) Proprietor: Murata Manufacturing Co., Ltd., Kyoto 617-8555 (JP)
(72) Inventor: HOSOTANI Tatsuya, Nagaokakyo-shi Kyoto 617-8555 (JP); UNO Yoshiyuki, Nagaokakyo-shi Kyoto 617-8555 (JP)
(74) Representative: Zinnecker, Armin
(86) International application number: PCT/JP2010/055343
(87) International publication number: WO 2010/119761

(56) References cited:
- JP-A- 2000 069 746
- JP-A- 2001 037 220
- JP-A- 2001 258 569
- JP-A- 2002 165 442
- JP-A- 2002 209 381
- JP-A- 2003 009 528
- JP-A- 2004 023 846
- JP-A- 2004 312 913
- JP-A- 2007 097 379
- JP-U- H0 476 185
- US-A- 5 430 633
- US-A- 6 025 706
- US-A1- 2004 130 921
- US-A1- 2006 013 021

## Description

### Technical Field

This invention relates to a switching power supply such as a resonance-type power supply or a half-bridge-type power supply, for example, which outputs a predetermined voltage signal by causing a plurality of switching elements to be alternately turned on and off.

### Background Art

In the past, various kinds of switching power supplies have been invented each of which outputs a predetermined voltage signal by causing a plurality of switching elements to be alternately turned on and off. For example, in a switching power supply utilizing a PWM method of a half-bridge-type converter, a time ratio is adjusted at a constant switching frequency, thereby obtaining a desired output voltage signal. However, in such a switching power supply in which a plurality of switching elements are alternately turned on and off, if there is a time period when a plurality of switching elements are simultaneously turned on, a large short-circuit current flows, and there is a possibility that the power supply is destroyed. Therefore, a so-called dead time is provided in which both of the plural switching elements are turned off.

Since such a dead time is provided, a switching power supply disclosed in WO 2005-076447 is a switching power supply in which a first switching element and a second switching element are alternately turned on and off, and the change of magnetic flux of a transformer due to the turnoff of the first switching element is used as a trigger to turn on the second switching element. In addition, the change of magnetic flux of a transformer due to the turnoff of the second switching element is used as a trigger to turn on the first switching element. By performing such switching control as described above, the first switching element and the second switching element are prevented from being simultaneously put into on-states.

US 5 430 633 A discloses a switching power supply apparatus comprising the features of the preamble part of claim 1.

US 6 025 706 A discloses a DC-DC converter.

### Summary of Invention

### Technical Problem

However, in the above-mentioned switching power supply in WO 2005-076447, since the on-time of the second switching element is determined by a time constant circuit including a resistor and a capacitor, a switching frequency varies and a switching noise occurs in a wide range in response to the variation of the switching frequency.

In addition, while the time constant circuit is designed with taking some account of the dead time, since a dead time having a same time length is set in a full load region, namely even in a transient state and a steady state, it is difficult to say that an optimum dead time is set in the steady state in which a dead time as long as that in the transient state is not necessary. Accordingly, the above-mentioned switching power supply has been less than optimum in an aspect of efficiency while having had a high degree of reliability.

An object of the present invention is to realize a switching power supply in which a plurality of switching elements are prevented from being simultaneously turned on while a switching frequency being maintained constant, and switching is performed with an optimum dead time.

### Solution to Problem

(1) This invention relates to a switching power supply apparatus including a direct-current power-supply input unit to which a direct-current input voltage Vi is input, a transformer T being configured by one magnetic component and including at least a first primary winding np and a first secondary winding ns1, magnetically coupled, an inductor Lr connected in series to the first primary winding np, a first switch circuit S1 including a parallel circuit of a first switching element Q1, a first capacitor C1, and a first diode D1, a second switch circuit S2 including a parallel circuit of a second switching element Q2, a second capacitor C2, and a second diode D2, a third capacitor Cr, a first series circuit that is connected to both end portions of the direct-current power-supply input unit and in which the first primary winding np and the first switch circuit S1 are connected in series, and a second series circuit that is connected to both end portions of the first switch circuit S1 or both end portions of the first primary winding np and in which the second switch circuit S2 and the third capacitor Cr are connected in series, wherein the first switch circuit 81 and the second switch circuit S2 are configured so as to operate so that the first switch circuit S1 and the second switch circuit S2 complementarily repeat turnon and turnoff with a time period in between, for which both the first switch circuit S1 and the second switch circuit S2 are turned off, and the switching power supply apparatus includes a power converter circuit configured so that an output voltage Vout is output to a secondary side through a first rectification smoothing circuit rectifying and smoothing an alternating-current voltage output from the first secondary winding ns1. This switching power supply apparatus includes first monitor signal generation means for detecting the change of a voltage or current in the power converter circuit, which occurs owing to the turnoff of a switch circuit in an on-state from among the first switch circuit S1 and the second switch circuit S2, and generating a monitor signal, output voltage detection means for detecting the output voltage Vout, feedback signal generating means for generating a feedback signal according to the output voltage Vout detected by the output voltage detection means, and a switching control circuit controlling the first switching element Q1 and the second switching element Q2.

This switching control circuit includes an oscillator generating a triangular wave whose frequency is settable and nearly constant, a first comparator comparing the triangular wave signal with the feedback signal, and a second comparator comparing an output signal of the first monitor signal generation means with a first threshold value, wherein a gate signal of the first switch circuit S1 and a gate signal of the second switch circuit S2 are generated on the basis of outputs of the first comparator and the second comparator.

In this configuration, the on-times of the first and second switching elements are determined by the switching control circuit in an analog IC in an analog format. At this time, a timing to be a trigger for the turnon of each switching element is determined on the basis of the comparison result between the monitor signal based on the transformer voltage Vt and the threshold value and a timing to be a trigger for the turnoff of each switching element is determined on the basis of the comparison result between the feedback signal and the triangular wave signal. Therefore, since the turnon of the switching element to be turned on is performed from a start timing including a predetermined delay amount set with the timing of the change of magnetic flux as a basing point, the change of magnetic flux being due to the turnoff of the switching element that has been in an on-state most recently, individual switching elements are not simultaneously put into on-states. Furthermore, the switching frequency becomes constant owing to the periodicity of the triangular wave signal. In addition, furthermore, using the feedback signal, the turn off timing according to the level of the output voltage is obtained, and hence it is possible to obtain a stable output voltage as a switching power supply.
(2) In addition, in the switching power supply apparatus of this invention, a magnetic polarity of the first primary winding np and the first secondary winding ns1 is a reverse polarity with respect to a direction of a current flowing when the first switch circuit S1 is in a conduction state or the second switch circuit S2 is in a conduction state.
   This configuration indicates that the switching power supply apparatus is an isolated flyback converter. In addition, even using such a configuration, it is possible to realize switching control characterized by the present invention.
(3) In addition, in the switching power supply apparatus of this invention, a magnetic polarity of the first primary winding np and the first secondary winding ns1 is a same polarity with respect to a direction of a current flowing when the first switch circuit S1 is in a conduction state or the second switch circuit S2 is in a conduction state.
   This configuration indicates that the switching power supply apparatus is an isolated forward converter. In addition, even using such a configuration, it is possible to realize switching control characterized by the present invention.
(4) In addition, in the switching power supply apparatus of this invention, the transformer T further includes a second secondary winding ns2, the first secondary winding ns1 and the second secondary winding ns2 are connected in series, and a magnetic polarity of the first primary winding np and the first secondary winding ns1 and a magnetic polarity of the first primary winding np and the second secondary winding ns2 are same polarities with respect to a direction of a current flowing when the first switch circuit S1 is in a conduction state or the second switch circuit S2 is in a conduction state, and the first rectification smoothing circuit includes a center tap-type full-wave rectifier circuit, at least one filter inductor Lo, and at least one smoothing capacitor Co.
   In this configuration, a center tap-method isolated switching power supply is realized. In addition, even in the switching power supply having such a configuration, it is possible to apply the above-mentioned switching control
(5) In addition, in the switching power supply apparatus of this invention, the transformer T further includes a second secondary winding ns2, the first secondary winding ns1 and the second secondary winding ns2 are connected in series, and a magnetic polarity of the first primary winding np and the first secondary winding ns1 is a reverse polarity and a magnetic polarity of the first primary winding np and the second secondary winding ns2 is a same polarity, with respect to a direction of a current flowing when the first switch circuit S1 is in a conduction state or the second switch circuit S2 is in a conduction state, and in the first rectification smoothing circuit, cathode sides of rectifying elements are connected to both end portions of the second secondary winding ns2, respectively, anode sides of the rectifying elements are subjected to common connection, one end portion of at least one filter inductor Lo is connected to the other end portion of the first secondary winding ns1, and at least one smoothing capacitor Co is connected between the other end portion of the filter inductor Lo and the anodes of the rectifying elements.
   This configuration includes the first and second secondary windings, and the isolated switching power supply is realized in which electrical power transmission can be performed over almost the entire time period. In addition, even in a switching power supply having such a configuration, it is possible to apply the above-mentioned switching control and a more efficient switching power supply is realized.
(6) In addition, in the switching power supply apparatus of this invention, a primary-side leakage flux of the transformer T is used as the inductor Lr.
(7) In addition, in the switching power supply apparatus of this invention, a secondary-side leakage flux of the transformer T is used as the filter inductor Lo.
   In these configurations, since an element to be a configuration element of the switching power supply can be omitted, it is possible to simplify the circuit configuration of a switching power supply having such a feature as described above.
(8) In addition, in the switching power supply apparatus of this invention, a turn ratio between the first secondary winding ns1 and the second secondary winding ns2 is 1 : 2
   In this configuration, in the above-mentioned isolated switching power supply in which electrical power transmission can be performed over almost the entire time period, the output voltage is stable over almost the entire time period and a ripple is improved.
(9) In addition, in the switching power supply apparatus of this invention, the transformer T further includes a second primary winding nb, one end portion of the second primary winding nb is connected on a low electrical potential side of the direct-current input power supply Vi, and the other end portion thereof is supplied as a direct-current power-supply voltage used for the switching control circuit through a second rectification smoothing circuit.
   In this configuration, using the second primary winding (bias winding), it is possible to easily supply a driving power used for a control analog IC in a self-apparatus.
(10) In addition, in the switching power supply apparatus of this invention, the rectifying element of the first rectification smoothing circuit is a field-effect transistor.
   This configuration illustrates an example in which an FET is used as the rectifying element of the rectification smoothing circuit. In addition, even in such a switching power supply apparatus, it is possible to apply the above-mentioned switching control,
(11) In addition, in the switching power supply apparatus of this invention, the rectifying element of the first rectification smoothing circuit is subjected to on-off control by the switching control circuit.
   This configuration illustrates an example in which an FET is used as the rectifying element of the rectification smoothing circuit and an example in which the corresponding FFT is controlled by an analog IC such as an ASIC or the like, along with the above-mentioned first and second switching elements. In addition, even in such a switching power supply apparatus, it is possible to apply the above-mentioned switching control.
(12) In addition, this invention relates to a switching power supply apparatus including a direct-current power-supply input unit to which a direct-current input voltage Vi is input, an inductor Lp configured by one magnetic component, a first switch circuit S1 including a parallel circuit of a first switching element Q1, a first capacitor C1, and a first diode D1, and a second switch circuit S2 including a parallel circuit of a second switching element Q2, a second capacitor C2, and a second diode D2, wherein a series circuit including the first switch circuit S1 and the second switch circuit S2 is connected to both end portions of the direct-current power-supply input unit, the switching power supply apparatus is configured so that one end portion of the inductor Lp is connected to a connection point between the first switch circuit S1 and the second switch circuit S2 and, from the other end portion thereof, an output voltage Vout is output through a third capacitor Co connected in parallel to the first switch circuit S1. In this switching power supply apparatus, the first switch circuit S1 and the second switch circuit S2 are configured so as to operate so that the first switch circuit S1 and the second switch circuit S2 complementarily repeat turnon and turnoff with a time period in between, for which both the first switch circuit S1 and the second switch circuit S2 are turned off, and this switching power supply apparatus includes first monitor signal generation means for detecting the change of a voltage or current in the power converter circuit, which occurs owing to the turnoff of a switch circuit in an on-state from among the first switch circuit S1 and the second switch circuit S2, and generating a monitor signal, output voltage detection means for detecting the output voltage Vout, feedback signal generating means for generating a feedback signal according to the output voltage Vout detected by the output voltage detection means, and a switching control circuit controlling the first switching element Q1 and the second switching element Q2.
   This switching control circuit includes an oscillator generating a triangular wave whose frequency is settable and nearly constant, a first comparator comparing the triangular wave signal with the feedback signal, and a second comparator comparing an output signal of the first monitor signal generation means with a first threshold value, wherein a gate signal of the first switch circuit S1 and a gate signal of the second switch circuit S2 are generated on the basis of outputs of the first comparator and the second comparator.
   This configuration indicates that the switching power supply apparatus is a non-isolated buck-boost converter including a polarity-reversed chopper circuit. In addition, even in such a non-isolated switching power supply, it is possible to apply the above-mentioned switching control.
(13) In addition, in the switching power supply apparatus of this invention, the switching control circuit further includes a third comparator comparing an output signal of the first monitor signal generation means with a second threshold value, wherein the gate signal of the first switch circuit S1 is generated on the basis of the outputs of the first comparator and the second comparator, and the gate signal of the second switch circuit S2 is generated on the basis of the outputs of the first comparator and the third comparator.
   This configuration indicates the specific configuration of the switching control unit, and indicates an example in which three comparators are used. In addition, even in such a switching power supply apparatus, it is possible to apply the above-mentioned switching control.
(14) In addition, in the switching power supply apparatus of this invention, by replacing the second comparator and the third comparator with one hysteresis comparator, the first threshold value and the second threshold value are specified.
   This configuration indicates the specific configuration of the switching control unit, and indicates an example in which part of the comparator is replaced with the hysteresis comparator. In addition, even in such a switching power supply apparatus, it is possible to apply the above-mentioned switching control.
(15) In addition, in the switching power supply apparatus of this invention, a maximum value of an on-time of a pulse width from a time when a signal for turning on one of the first switching element Q1 and the second switching element Q2 is output to a time when an output signal for turning off the corresponding switching element is generated is restricted to less than a period of the oscillator generating the triangular wave.
   In this configuration, the maximum value of the on-time of the switching element is restricted on the basis of the period of the triangular wave. In addition, using the switching power supply apparatus in which such a setting is performed, it is possible to more efficiently realize the above-mentioned switching control.
(16) In addition, in the switching power supply apparatus of this invention, a current flowing through the transformer T or the inductor Lp in the power converter circuit or a current flowing through a switching element is detected, and the maximum value of the on-time is restricted.
   In this configuration, in the above-mentioned switching control, it is possible to prevent an overcurrent from flowing.
(17) In addition, in the switching power supply apparatus of this invention, the first switch circuit S1 or the second switch circuit S2 is a field-effect transistor.
   This configuration indicates an example in which FETs are used as individual switch circuits. In addition, even in such a switching power supply apparatus, it is possible to apply the above-mentioned switching control.
(18) In addition, in the switching power supply apparatus of this invention, the first switch circuit S1 or the second switch circuit S2 is driven by a zero voltage switching operation in which, after voltages of both end portions of the switch circuit have been decreased to 0 V or the vicinity of 0 V, the switching element Q1 or Q2 is turned on.
   This configuration specifically indicates a configuration in which a so-called zero-voltage switching (ZVS) is realized. Accordingly, it is possible to efficiently suppress a loss occurring at the time of the turnon of the switching element.
(19) In addition, in the switching power supply apparatus of this invention, the first monitor signal generation means is a current transformer used for detecting a current flowing through the inductor Lr.
(20) In addition, in the switching power supply apparatus of this invention, the first monitor signal generation means utilizes the change of a drain-to-source voltage of at least one of the first switching element Q1 and the second switching element Q2
(21) In addition, in the switching power supply apparatus of this invention, the first monitor signal generation means utilizes the change of a drain-to-source current of at least one of the first switching element Q1 and the second switching element Q2.
(22) In addition, in the switching power supply apparatus of this invention, the first monitor signal generation means utilizes the change of a voltage occurring between both end portions of the second primary winding nb.

These configurations indicate specific configurations of the first monitor signal generation means, and even using any one of the above-mentioned configurations, it is possible to realize switching control characterized by the present invention.

### Advantageous Effects of Invention

According to the invention, since it is possible to perform switching with an optimum dead time while a plurality of switching elements are not simultaneously turned on, it is possible to realize a switching power supply having a high degree of reliability and a high degree of efficiency. Furthermore, at this time, since a switching frequency is constant, it is possible to easily deal with a noise due to the switching frequency and it is possible to realize a switching power supply having an excellent EMI characteristic. In addition, furthermore, since it is possible to realize these control operations using an analog IC that is easily available and inexpensive, it is possible to cheaply produce a switching power supply in which the above-mentioned advantageous effect is obtained.

### Brief Description of Drawings

Fig. 1 is a circuit diagram of a switching power supply according to a first embodiment.
Fig. 2 includes a circuit diagram illustrating a configuration of an internal block of a control analog IC 10 and a waveform diagram illustrating a temporal relationship between individual signals.
Fig. 3 includes a circuit diagram illustrating a configuration of an internal block of a control analog IC 10' including another configuration and a waveform diagram illustrating a temporal relationship between states of individual signals.
Fig. 4 includes circuit diagrams illustrating configurations of internal blocks of control analogs IC 20, 30, 40, and 50 having other configurations.
Fig. 5 is a circuit diagram of a switching power supply including another circuit configuration according to the first embodiment.
Fig. 6 is a circuit diagram of a switching power supply according to a second embodiment.
Fig. 7 is a circuit diagram of a switching power supply according to a third embodiment.
Fig. 8 is a circuit diagram of a switching power supply including another circuit configuration according to the third embodiment.
Fig. 9 is a circuit diagram of a switching power supply including another circuit configuration according to the third embodiment.
Fig. 10 is a circuit diagram of a switching power supply according to a fourth embodiment.
Fig. 11 is a circuit diagram of a switching power supply including another circuit configuration according to the fourth embodiment.
Fig. 12 is a circuit diagram of a switching power supply including another circuit configuration according to the fourth embodiment.
Fig. 13 is a circuit diagram of a switching power supply according to a fifth embodiment.
Fig. 14 is a circuit diagram of a switching power supply according to a sixth embodiment.
Fig. 15 is a circuit diagram of a switching power supply according to a seventh embodiment.
Fig. 16 is a circuit diagram of a switching power supply according to an eighth embodiment.
Fig. 17 is a circuit diagram of a switching power supply according to a ninth embodiment.
Fig. 18 is a circuit diagram of a switching power supply including another circuit configuration according to the ninth embodiment.
Fig. 19 is a circuit diagram of a switching power supply according to a tenth embodiment.
Fig. 20 is a circuit diagram of a switching power supply according to an eleventh embodiment.
Fig. 21 is a circuit diagram of a switching power supply including another circuit configuration according to the eleventh embodiment.
Fig. 22 is a circuit diagram of a switching power supply according to a twelfth embodiment.
Fig. 23 is a circuit diagram of a switching power supply including another circuit configuration according to the twelfth embodiment.
Fig. 24 is a circuit diagram of a switching power supply according to a thirteenth embodiment.

### Description of Embodiments

### [First Embodiment]

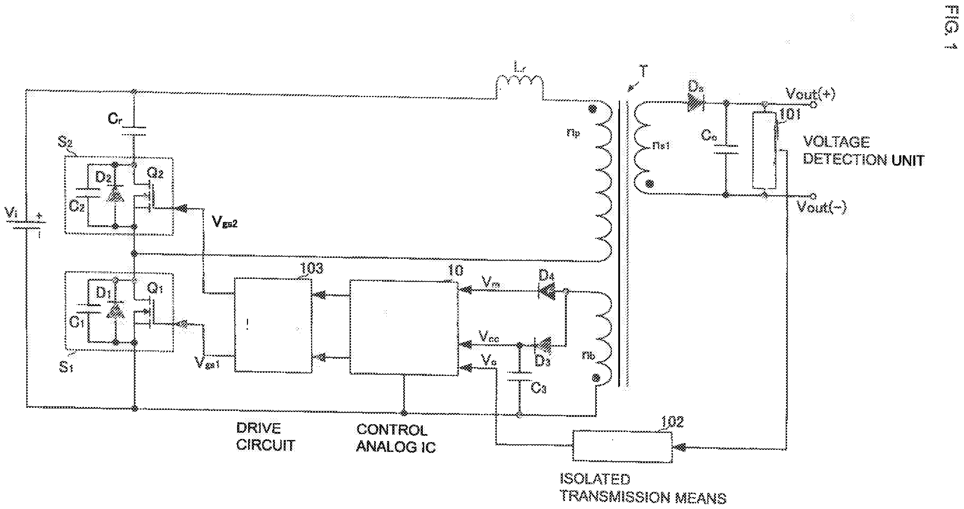

A switching power supply according to a first embodiment will be described with reference to drawings. Fig. 1 is the circuit diagram of the switching power supply according to the present embodiment.

### (Primary-Side Circuit Configuration of Transformer T)

An inductor Lr, a primary winding np of a transformer T, and a first switch circuit S1 are connected in series to both end portions of an input power supply Vi, to which a direct-current input voltage is applied. The first switch circuit S1 includes a first switching element Q1, a diode D1, and a capacitor C1. The first switching element Q1 includes a FET, a drain terminal is connected to the primary winding np of the transformer T, and a source terminal is connected to the input power supply Vi. The diode D1 and the capacitor C1 are connected in parallel between the drain and the source of the first switching element Q1, and may be replaced with a parasitic diode and a parasitic capacitance of the first switching element Q1 that is an FET. The first switching element Q1 performs an on-off operation on the basis of a first switching control signal Vgs1 supplied from a control analog IC 10 through a drive circuit 103.

In addition, a second switch circuit S2 and a capacitor Cr are connected so as to form a closed circuit with the primary winding np of the transformer T and the inductor Lr. The second switch circuit S2 includes a second switching element Q2 in which an FET is included, a diode D2, and a capacitor C2. The drain terminal of the second switching element Q2 is connected to the capacitor Cr, and the source terminal thereof is connected to the primary winding np of the transformer T. The diode D2 and the capacitor C2 are connected in parallel between the drain and the source of the second switching element Q2, and may be replaced with a parasitic diode and a parasitic capacitance of the second switching element Q2 that is an FET. In the same way as the first switching element Q1, the second switching element Q2 performs an on-off operation on the basis of a second switching control signal Vgs2 supplied from the control analog IC 10 through the drive circuit 103.

In addition to the above-mentioned primary winding np, a bias winding nb is disposed on the primary side of the transformer T, and one end portion of the bias winding nb is connected to the input power supply Vi. The anode of a diode D3 is connected to the other end portion of the bias winding nb. A capacitor C3 is connected to the cathode of the diode D3. According to this configuration, a rectification smoothing circuit is formed by the diode D3 and the capacitor C3, and a driving voltage Vcc for the control analog IC 10 is supplied to the control analog IC 10.

In addition, the anode of a diode D4 is connected to the other end portion of this bias winding nb, and the cathode of the corresponding diode D4 is connected to the switch control analog IC 10, thereby supplying a monitor signal Vm to the control analog IC 10.

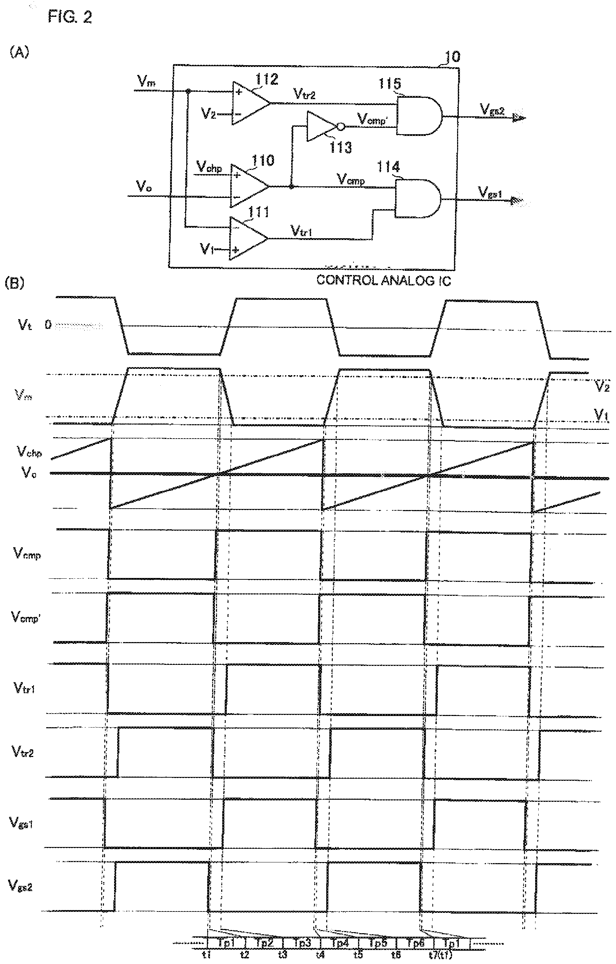

The control analog IC 10 is configured using such an analog circuit as illustrated in one of Fig. 2A, Fig. 3A, and Fig. 4A to Fig. 4D. The control analog IC 10 is driven using the above-mentioned driving voltage Vcc, and, on the basis of the monitor signal Vm and a detection voltage signal Vo obtained from the secondary side circuit of the transformer T, generates the first switching control signal Vgs1 used for driving the first switching element Q1 and the second switching control signal Vgs2 used for driving the second switching element Q2.

For example, the drive circuit 103 includes a high-side driver IC or the like, and inputs and boosts the first switching control signal Vgs1 and the second switching control signal Vgs2 into signals whose levels can drive at least the second switching element Q2. The drive circuit 103 outputs the first switching control signal Vgs1 to the first switching element Q1 and outputs the second switching control signal Vgs2 to the second switching element Q2.

### (Secondary-Side Circuit Configuration of Transformer T)

A secondary winding ns1 of the transformer T is wound so as to have a reverse polarity with respect to the primary winding np, and both end portions of the secondary winding ns1 are voltage output terminals Vout(+) and Vout(-). The anode of a diode Ds is connected to one end portion on a voltage output terminal Vout(+) side of the secondary winding ns1, and the cathode of the diode Ds is connected to the voltage output terminal Vout(+). In addition, a capacitor Co is connected between both terminals of the voltage output terminals Vout(+) and Vout(-). According to such a configuration as described above, a rectification smoothing circuit based on the diode Ds and the capacitor Co is formed.

In addition, a voltage detection unit 101 including a series resistance circuit and the like is connected between both terminals of the voltage output terminals Vout(+) and Vout(-), generates a detection voltage signal Vo according to an output voltage level between the voltage output terminals Vout(+) and Vout(-), and outputs the detection voltage signal Vo to isolated transmission means 102.

The isolated transmission means 102 includes a photo coupler or the like, and transmits, to the control analog IC 10 on the primary side, the detection voltage signal Vo generated in the voltage detection unit 101 on the secondary side.

According to such a configuration described above, an isolated-type switching power supply based on a flyback method is configured.

### (Specific Configuration of Switching Control Circuit)

The control analog IC 10 is realized by a so-called analog PWM control IC chip. In addition, on the basis of the monitor signal Vm and the detection voltage signal Vo, which are input, the control analog IC 10 generates the first switching control signal Vgs1 and the second switching control signal Vgs2 with maintaining a constant switching period Ts so that a desired output voltage level is obtained and the first switching element Q1 and the second switching element Q2 are not simultaneously turned on. The generated first switching control signal Vgs1 and second switching control signal Vgs2 are output to the drive circuit 103.

Fig. 2A is a circuit diagram illustrating the configuration of the internal block of the control analog IC 10 and Fig. 2B is a waveform diagram illustrating a temporal relationship between individual signals within the control analog IC 10.

The control analog IC 10 includes comparators 110, 111, and 112, an inverter 113, and AND circuits 114 and 115.

The control analog IC 10 generates a saw-tooth wave signal Vchp whose one period is a switching period Ts. This saw-tooth wave signal Vchp includes a waveform whose level is gradually increased from a minimum level for the corresponding one period and reset to the minimum level at a time when the level has reached a maximum level in one period. In addition, the detection voltage signal Vo is set so as to become a level located between the maximum level and the minimum level of the saw-tooth wave signal Vchp.

The control analog IC 10 synchronises the reset timing of the saw-tooth wave signal Vchp with a predetermined timing. For example, as illustrated in Fig. 2B, the control analog C10 synchronizes the reset timing of the saw-tooth wave signal Vchp with a timing when the monitor signal Vm reaches a threshold value V2, or the like.

The comparator 110 inputs the saw-tooth wave signal Vchp and the detection voltage signal Vo. The comparator 110 outputs a first determination criterion signal Vcmp that is of a Hi level for a time period during which the level of the saw-tooth wave signal Vchp is higher than the level of the detection voltage signal Vo and is of a Low level for a time period during which the level of the saw-tooth wave signal Vchp is lower than the level of the detection voltage signal Vo.

The comparator 111 inputs the monitor signal Vm and a signal (hereinafter, referred to as a threshold value signal V1) giving a threshold value level V1. The comparator 111 outputs a first switching judgment-use signal Vtr1 that is of a Hi level for a time period during which the level of the threshold value signal V1 is higher than the level of the monitor signal Vm and is of a Low level for a time period during which the level of the threshold value signal V1 is lower than the level of the monitor signal Vm.

The comparator 112 inputs the monitor signal Vm and a signal (hereinafter, referred to as a threshold value signal V2) giving a threshold value level V2. The comparator 112 outputs a second switching judgment-use signal Vtr2 that is of a Hi level for a time period during which the level of the monitor signal Vm is higher than the level of the threshold value signal V2 and is of a Low level for a time period during which the level of the monitor signal Vm is lower than the level of the threshold value signal V2.

The inverter 113 subjects the first determination criterion signal Vcmp to reverse processing, and outputs a second determination criterion signal Vcmp'.

The AND circuit 114 inputs the first determination criterion signal Vcmp and the first switching judgment-use signal Vtr1, and outputs the first switching control signal Vgs1 that is of a Hi level for a time period during which the first determination criterion signal Vcmp and the first switching judgment-use signal Vtr1 are of Hi levels and is of a Low level for a time period other than that.

The AND circuit 115 inputs the second determination criterion signal Vcmp' and the second switching judgment-use signal Vtr2, and outputs the second switching control signal Vgs2 that is of a Hi level for a time period during which the second determination criterion signal Vcmp' and the second switching judgment-use signal Vtr2 are of Hi levels and is of a Low level for a time period other than that.

According to such processing, individual signals have a temporal relationship between waveforms illustrated in Fig. 2B.

In addition, while control described later is repeatedly performed with the switching period Ts specified by the saw-tooth wave signal Vchp, for convenience of description, control processing for a specific time period (in the following description, one period of the switching period Ts from a timing t0 at which the saw-tooth wave signal Vchp is reset) will be described.

### (1) State 1 [Time Period Tp1: Timing to to t1]

As illustrated with respect to the timing t0 in Fig. 2, when, with respect to the level of the detection voltage signal Vo, the level of the saw-tooth wave signal Vchp transits from a minimum level side to a maximum level side with zero crossing, the first determination criterion signal Vcmp output from the comparator 110 transits from the Low level to the Hi level. In addition, the second determination criterion signal Vcmp' output through the comparator 110 and the inverter 113 transits from the Hi level to the Low level. In response to this, the second switching control signal Vgs2 output from the AND circuit 115 transits to the Low level. In this way, when the second switching control signal Vgs2 is caused to transit to the Low level, the transformer voltage Vt rises and the monitor signal Vm falls.

In addition, when the transformer voltage Vt rises, the monitor signal Vm falls, and the level of the monitor signal Vm becomes less than the threshold value V2 as illustrated with respect to a timing t1 in Fig. 2, the second switching judgment-use signal Vtr2 output from the comparator 112 also transits to the Low level along with the former second switching control signal Vgs2.

### (2) State 2 [Time Period Tp2: Timing t2 to t3]

Furthermore, when the transformer voltage Vt rises, the monitor signal Vm falls, and the level of the monitor signal Vm becomes less than or equal to the threshold value V1 after a predetermined delay time, the first switching judgment-use signal Vtr1 output from the comparator 111 transits to the Hi level as illustrated with respect to a timing t2 in Fig. 2. In this way, since both the first determination criterion signal Vcmp and the first switching judgment-use signal Vtr1 become Hi levels at the timing t2, the first switching control signal Vgs1 transits from the Low level to the Hi level.

### (3) State 3 [Time Period Tp3: timing t3 to t4]

After a predetermined time has elapsed in a state in which the first switching control signal Vgs1 is maintained at the Hi level, when, as illustrated with respect to a timing t4 in Fig. 2, a timing arrives at which the saw-tooth wave signal Vchp is reset, the saw-tooth wave signal Vchp transits from the maximum level to the minimum level. Therefore, the first determination criterion signal Vcmp output from the comparator 110 transits from the Hi level to the Low level. In response to this, the first switching control signal Vgs1 output from the AND circuit 114 transits to the Low level. In this way, when the first switching control signal Vgs1 is caused to transit to the Low level, the transformer voltage Vt falls and the monitor signal Vm rises. In addition, the second determination criterion signal Vcmp' output through the comparator 110 and the inverter 113 transits from the Low level to the Hi level.

Here, a time during which the first switching control signal Vgs1 is maintained at the Hi level is determined on the basis of the length of a time period during which the level of the saw-tooth wave signal Vchp is higher than the detection voltage signal Vo, using the above-mentioned circuit configuration. Accordingly, it is possible to set the length of time during which the first switching control signal Vgs1 is maintained at the Hi level, in response to the level of the detection voltage signal Vo, namely, an output voltage level. Furthermore, since a timing at which the first switching control signal Vgs1 is caused to transit from the Hi level to the Low level is given as the transition timing of the saw-tooth wave signal Vchp having a constant period.

### (4) State 4 [Time Period Tp4: Timing t4 to t5]

When the transformer voltage Vt falls, the monitor signal Vm rises, and the level of the monitor signal Vm becomes higher than the threshold value V1 as illustrated with respect to a timing t5 in Fig. 2, the first switching judgment-use signal Vtr1 output from the comparator 111 also transits to the Low level along with the former first switching control signal Vgs1.

### (5) State 5 [Time Period Tp5: Timing t5 to t6]

Furthermore, when the transformer voltage Vt falls, the monitor signal Vm rises, and the level of the monitor signal Vm becomes greater than or equal to the threshold value V2 after a predetermined delay time, the second switching judgment-use signal Vtr2 output from the comparator 112 transits to the Hi level as illustrated with respect to a timing t6 in Fig. 2. In this way, since both the second determination criterion signal Vcmp' and the second switching judgment-use signal Vtr2 become Hi levels at the timing t6, the second switching control signal Vgs2 transits from the Low level to the Hi level.

### (6) State 6 [Time Period Tp6: Timing t6 to t7 (t1)]

After a predetermined time has elapsed in a state in which the second switching control signal Vgs2 is maintained at the Hi level, when, as illustrated with respect to a timing t7 (t1) in Fig. 2, a timing appears again at which the level of the saw-tooth wave signal Vchp transits from the minimum level side to the maximum level side with zero crossing with respect to the level of the detection voltage signal Vo, the second determination criterion signal Vcmp' output through the comparator 110 and the inverter 113 transits from the Hi level to the Low level. In response to this, the second switching control signal Vgs2 output from the AND circuit 115 transits to the Low level. In this way, when the second switching control signal Vgs2 is caused to transit to the Low level, the transformer voltage Vt rises and the monitor signal Vm falls.

By performing such processing as described above, after a predetermined delay time from a timing at which the second switching control signal Vgs2 subjecting the second switching element Q2 to on-off control has transited to the Low level, the first switching control signal Vgs1 subjecting the first switching element Q1 to on-off control transits to the Hi level. In addition, after a predetermined delay time from a timing at which the first switching control signal Vgs1 subjecting the first switching element Q1 to on-off control has transited to the Low level, the second switching control signal Vgs2 subjecting the second switching element Q2 to on-off control transits to the Hi level. Accordingly, the first switching control signal Vgs1 and the second switching control signal Vgs2 do not simultaneously become Hi levels, and it is possible to prevent the first switching element Q1 and the second switching element Q2 from being simultaneously subjected to on control. At this time, switching is performed by setting the threshold values V1 and V2 using the signal level of the monitor signal Vm, and hence it is possible to control the first switching control signal Vgs1 and the second switching control signal Vgs2 at an optimum timing suited to a load situation.

In addition, the threshold value V1 is set to an electrical potential nearly equal to the Low level of the monitor signal Vm, and hence, at a timing at which the first switching control signal Vgs1 is supplied to the switching element Q1, the drain-to-source voltage of the switching element Q1 becomes "0" electrical potential or about "0" electrical potential, and it is possible to realize zero-voltage switching (ZVS). In the same way, contrary to the threshold value V1, the threshold value V2 is set to an electrical potential nearly equal to the Hi level of the monitor signal Vm, and hence, at a timing at which the second switching control signal Vgs2 is supplied to the switching element Q2, the drain-to-source voltage of the switching element Q2 becomes "0" electrical potential or about "0" electrical potential, and it is possible to realize zero-voltage switching (ZVS).

Furthermore, since the timings at which the first switching control signal Vgs1 and the second switching control signal Vgs2 transit to the Low levels are specified by the saw-tooth wave signal Vchp set to the constant period Ts, the switching period Ts becomes constant. Accordingly, it is possible to easily deal with a noise due to the switching period Ts and it is possible to realize a switching power supply having low EMI.

In addition, an analog IC is used in the same way as in the present embodiment, and hence it is not necessary to use a high-priced device such as a digital IC or the like including a DSP, an FPGA, or the like, for example. Therefore, it is possible to cheaply produce a switching power supply in which the above-mentioned switching control is performed.

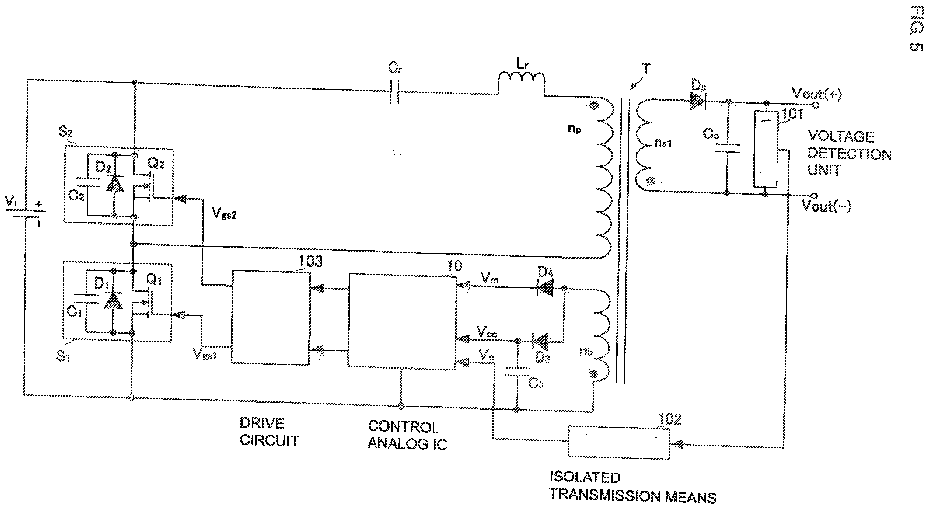

In addition, while, in the present embodiment, a case has been illustrated in which the capacitor Cr configuring a closed circuit along with the primary winding np, the inductor L1, and the switch circuit S2 is connected in parallel to the input power supply Vi on the primary side of the transformer T, a circuit configuration may be adopted in which the capacitor Cr is connected in series to the input power supply Vi, as illustrated in Fig. 5. Fig. 5 is the circuit diagram of a switching power supply including another circuit configuration illustrated in the first embodiment. Even in such a configuration, it is possible to apply the above-mentioned switching control, and it is possible to obtain the same function effect.

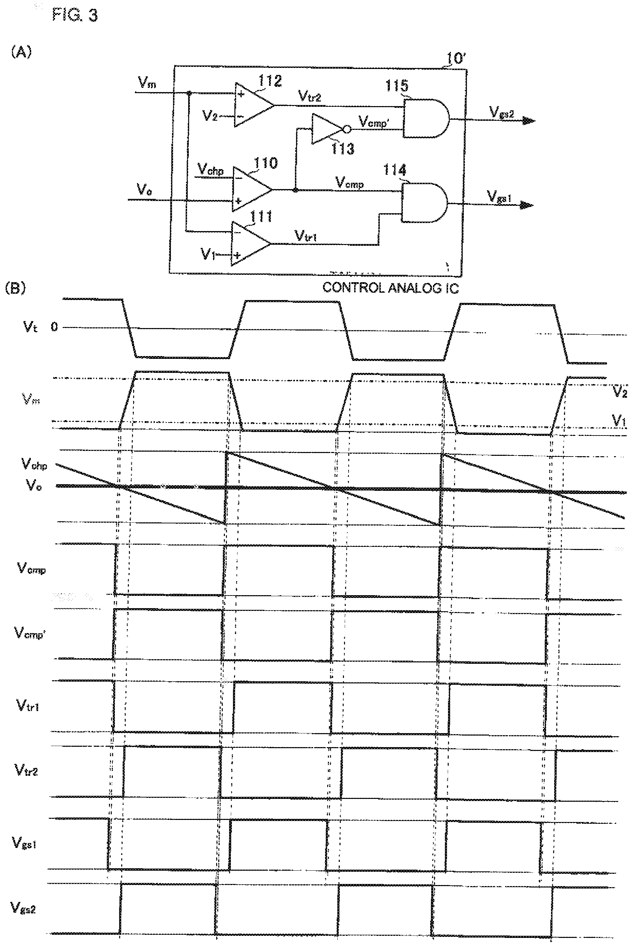

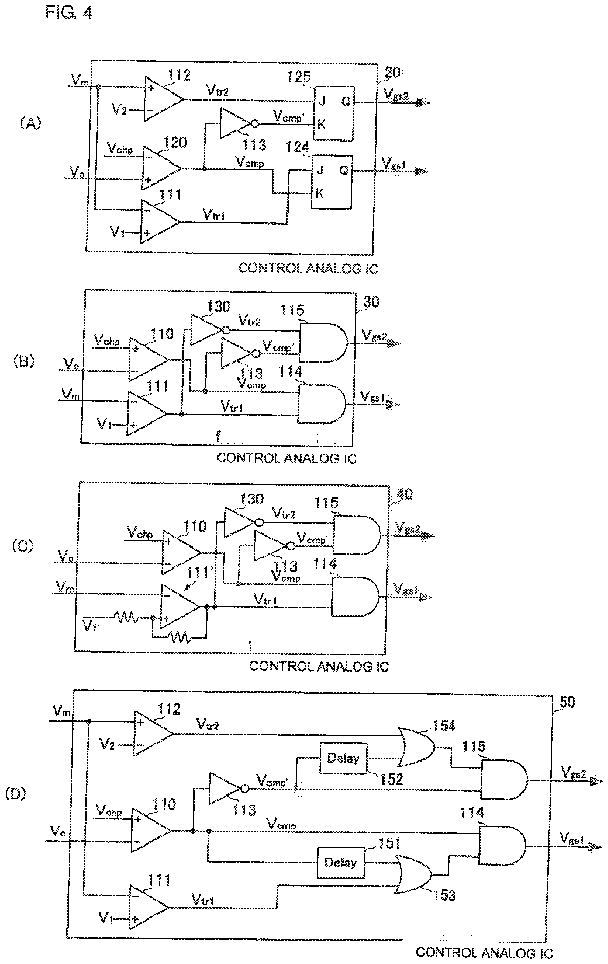

In addition, the configuration of the above-mentioned control analog IC is an example, and the circuit configuration illustrated in Fig. 3 or Fig. 4, or the like, may be adopted. Furthermore, another similar circuit configuration figured out on the basis of these circuit configurations and a relationship between waveforms may be adopted.

Fig. 3A is a circuit diagram illustrating the configuration of the internal block of a control analog IC 10' including another configuration and Fig. 3B is a waveform diagram illustrating a temporal relationship between individual signals within the control analog IC 10'. In addition, Fig. 4A to 4D are circuit diagrams illustrating configurations of internal blocks of control analogs IC 20, 30, 40, and 50 having other configurations.

In the control analog IC 10' illustrated in Fig. 3, a saw-tooth wave signal Vchp includes a waveform whose level is gradually decreased from a maximum level for one period and reset to transit to the maximum level at a time when the level has reached a minimum level after one period. In addition, a configuration is adopted in which, with respect to the above-mentioned comparator 110 in Fig. 2, the inputs of the saw-tooth wave signal Vchp and the detection voltage signal Vo to the comparator 120 are inverted. Even using such signals and a configuration, it is possible to obtain the above-mentioned function effect.

In addition, the control analog IC 20 illustrated in Fig. 4A is a control analog IC in which flip-flop circuits 124 and 125 are used in place of the AND circuits 114 and 115 with respect to the control analog IC 10 illustrated in Fig. 2. At this time, since a time period may occur in which input signals simultaneously become Hi levels, JK flip-flop circuits may be used as the flip-flop circuits 124 and 125.

In addition, with respect to the control analog IC 10 illustrated in Fig. 2, the control analog IC 30 illustrated in Fig. 4B generates the second switching judgment-use signal Vtr2 using no comparator 112 and an inverter 130.

With respect to the control analog IC 20 illustrated in Fig. 4A, the control analog IC 40 illustrated in Fig. 4C further uses a hysteresis comparator 111' in place of the comparator 111.

In the control analog IC 50 illustrated in Fig. 4D, an OR circuit 153 is attached between the output of the comparator 111 and the input of the AND circuit 114. The first switching judgment-use signal Vtr1 from the comparator 111 is input to the OR circuit 153, and the first determination criterion signal Vcmp from the delay circuit 151, delayed by a predetermined time, is also input to the OR circuit 153. In addition, in the control analog IC 40, an OR circuit 154 is attached between the output of the comparator 112 and the input of the AND circuit 115. The second switching judgment-use signal Vtr2 from the comparator 112 is input to the OR circuit 154, and the second determination criterion signal Vcmp' from the delay circuit 152, delayed by a predetermined time, is also input to the OR circuit 154. In the case of such a configuration, even in a situation in which the sufficient level of the monitor signal Vm is not obtained from the bias winding nb at the time of activation or the like along with the above-mentioned function effect, it is possible to output the first switching control signal Vgs1 and the second switching control signal Vgs2 using sufficient delay times set by the delay circuits 151 and 152.

### [Second Embodiment]

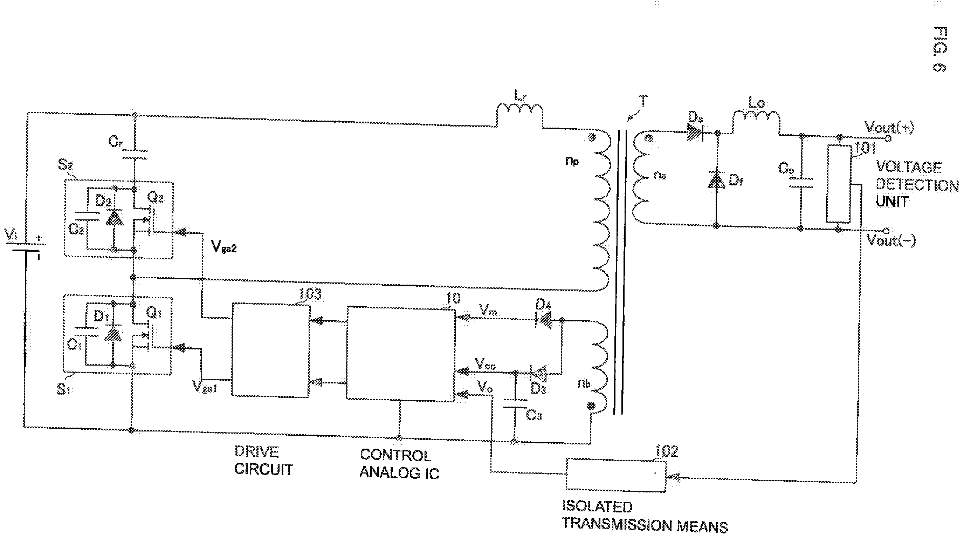

Next, a switching power supply according to a second embodiment will be described with reference to a drawing. Fig. 6 is the circuit diagram of the switching power supply according to the present embodiment.

As illustrated in Fig. 6, in the switching power supply according to the present embodiment, the primary winding np and the secondary winding ns1 of the transformer T are wound so as to have a same polarity. A circuit pattern on the primary side of the transformer T and the isolated transmission means 102 are the same as those in the above-mentioned switching power supply illustrated in Fig. 1, and a circuit pattern on a secondary side is different from that in the above-mentioned switching power supply illustrated in Fig. 1.

The anode of the diode Ds is connected to one end portion of the secondary winding ns1 of the switching power supply according to the present embodiment, and the cathode of the corresponding diode Ds is connected to the voltage output terminal Vout (+) through an inductor Lo. The other end portion of the secondary winding ns1 is connected to the voltage output terminal Vout(-).

In addition, a diode Df is connected in parallel between both terminals of the secondary winding ns1. At this time, the cathode of the diode Df is connected to the inductor Lo functioning as a filter inductor.

In addition, the capacitor Co is connected between both terminals of the voltage output terminals Vout(+) and Vout(-). According to such a configuration as described above, a rectification smoothing circuit based on the diodes Ds and Df, the inductor Lo, and the capacitor Co is formed. In addition, a voltage detection unit 101 including a series resistance circuit and the like is connected between both terminals of the voltage output terminals Vout(+) and Vout(-), generates a detection voltage signal Vo according to an output voltage level between both terminals of the voltage output terminals Vout(+) and Vout(-), and outputs the detection voltage signal Vo to the isolated transmission means 102.

According to such a configuration described above, an isolated-type switching power supply based on a forward method is configured. In addition, even in such a configuration, it is possible to apply the above-mentioned switching control illustrated in the first embodiment, and it is possible to obtain the same function effect.

### [Third Embodiment]

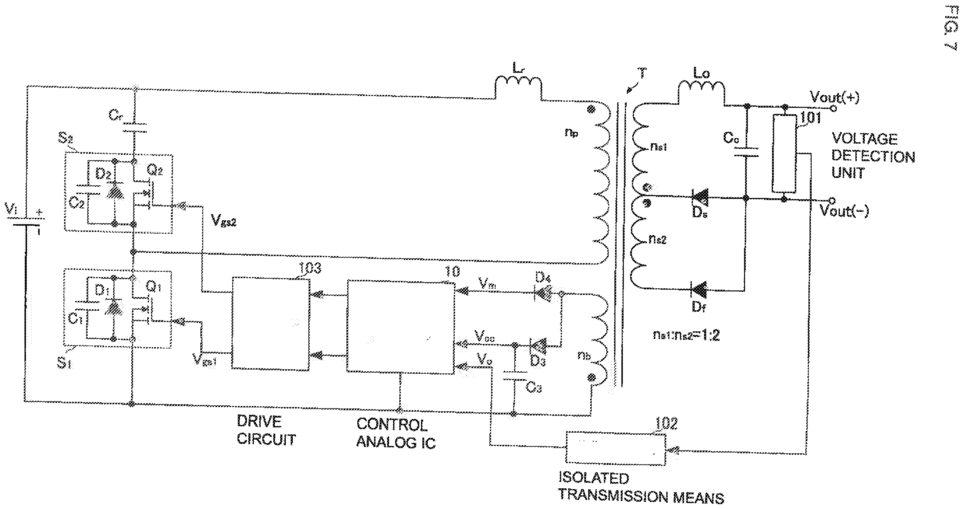

Next, a switching power supply according to a third embodiment will be described with reference to a drawing. Fig. 7 is the circuit diagram of the switching power supply according to the present embodiment.

As illustrated in Fig. 7, in the switching power supply according to the present embodiment, a circuit pattern on the primary side of the transformer T and the isolated transmission means 102 are the same as those in the above-mentioned switching power supply illustrated in Fig. 1, and the transformer T and a circuit pattern on the secondary side thereof are different from those in the above-mentioned switching power supply illustrated in Fig. 1.

The transformer T is a composite-type transformer in which two secondary windings ns1 and ns2 are disposed with respect to one primary winding np. The first secondary winding ns1 of the transformer T is wound with the polarity thereof being opposite to the primary winding np, and the second secondary winding ns2 is wound with the polarity thereof being the same as the primary winding np. At this time, the first secondary winding ns1 and the second secondary winding ns2 are formed so that a winding ratio between the first secondary winding ns1 and the second secondary winding ns2 complies with ns1 : ns2 = 1 : 2.

The voltage output terminal Vout(+) is connected to one end portion of the first secondary winding ns1 through the inductor Lo. The cathode of the diode Ds is connected to the other end portion of the first secondary winding ns1, and the anode of the corresponding diode Ds is connected to the voltage output terminal Vout(-).

One end portion of the second secondary winding ns2 is connected to the other end portion of the first secondary winding ns1. The cathode of the diode Df is connected to one end portion of the second secondary winding ns2, and the anode of the corresponding diode Df is also connected to the voltage output terminal Vout (-).

In addition, a capacitor Co is connected between both terminals of the voltage output terminals Vout(+) and Vout(-). According to such a configuration as described above, a rectification smoothing circuit based on the diodes Ds and Df, the inductor Lo, and the capacitor Co is formed. In addition, a voltage detection unit 101 including a series resistance circuit and the like is connected between both terminals of the voltage output terminals Vout(+) and Vout(-), generates a detection voltage signal Vo according to an output voltage level between both terminals of the voltage output terminals Vout(+) and Vout(-), and outputs the detection voltage signal Vo to the isolated transmission means 102 ,

In the switching power supply including such a configuration, for a time period when the first switch circuit S1 is turned on and the second switch circuit S2 is turned off, a current flows through a loop such as the voltage output terminal Vout(-) → the diode Df → the second secondary winding ns2 → the first secondary winding ns1 → the inductor Lo → the voltage output terminal Vout(+), and for a time period when the first switch circuit S1 is turned off and the second switch circuit S2 is turned on, a current flows through a loop such as the voltage output terminal Vout(-) → the diode Ds → the first secondary winding ns1 → the inductor Lo → the voltage output terminal Vout(+). Therefore, for any one of the on-period of the first switch circuit S1 (the off-period of the second switch circuit S2) and the off-period of the first switch circuit S1 (the on-period of the second switch circuit S2), it is possible to perform energy transmission from the primary side of the transformer T to the secondary side thereof. Namely, it is possible to practically perform energy transmission from the primary side of the transformer T to the secondary side thereof over almost the entire time period of the switching period Ts.

Here, while energy transmission is not performed for a time period for which the switching element is switched, it is possible to very efficiently perform energy transmission over almost the entire time period of the switching period Ts, by applying the above-mentioned switching control,

Furthermore, as illustrated in the present embodiment, by causing the winding ratio between the first secondary winding ns1 and the second secondary winding ns2 to comply with ns1 : ns2 = 1 : 2, it is possible to obtain a same output voltage level for any one of the on-period of the first switch circuit S1 (the off-period of the second switch circuit S2) and the off-period of the first switch circuit S1 (the on-period of the second switch circuit S2). Accordingly, it is possible to suppress a ripple component of the output voltage.

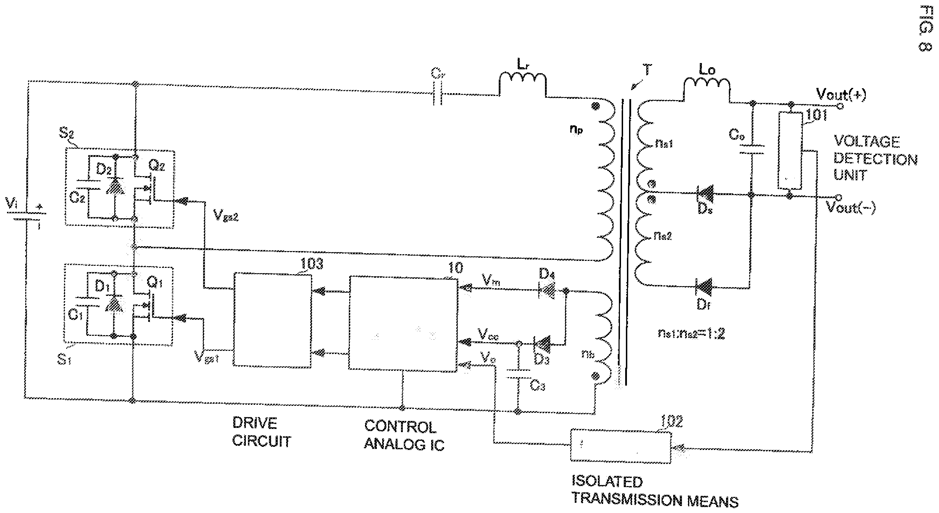

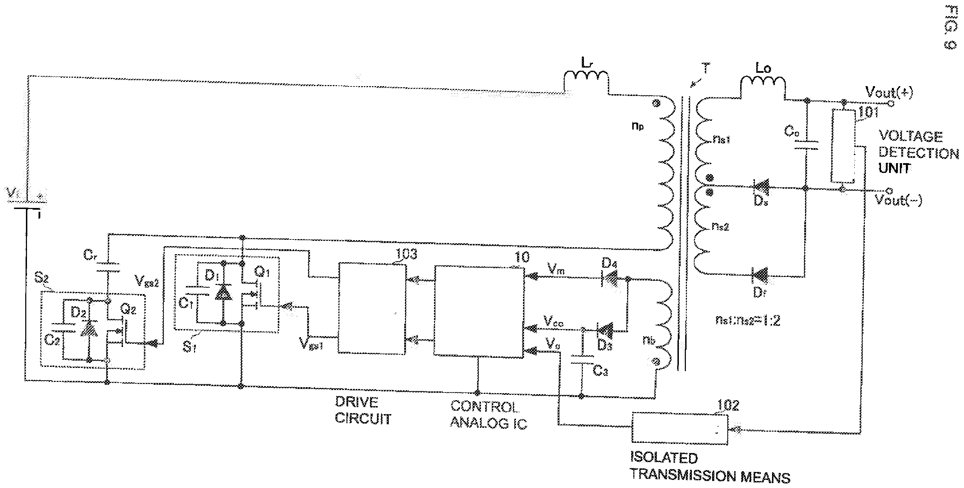

In addition, while, in the switching power supply in Fig. 7 of the present embodiment, a case has been illustrated in which the capacitor Cr configuring a closed circuit along with the primary winding np, the inductor L1, and the switch circuit S2 is connected in parallel to the input power supply Vi on the primary side of the transformer T, a circuit configuration may be adopted in which the capacitor Cr is connected in series to the input power supply Vi, as illustrated in Fig. 8. Fig. 8 is the circuit diagram of a switching power supply including another circuit configuration illustrated in the third embodiment. In addition, as illustrated in Fig. 9, a circuit configuration may be adopted in which a series circuit including the second switch circuit S2 and the capacitor Cr is connected in parallel to the first switch circuit S1. Fig. 9 is the circuit diagram of a switching power supply including another circuit configuration illustrated in the third embodiment. Even in such a configuration, it is possible to apply the above-mentioned switching control, and it is possible to obtain the same function effect.

### [Fourth Embodiment]

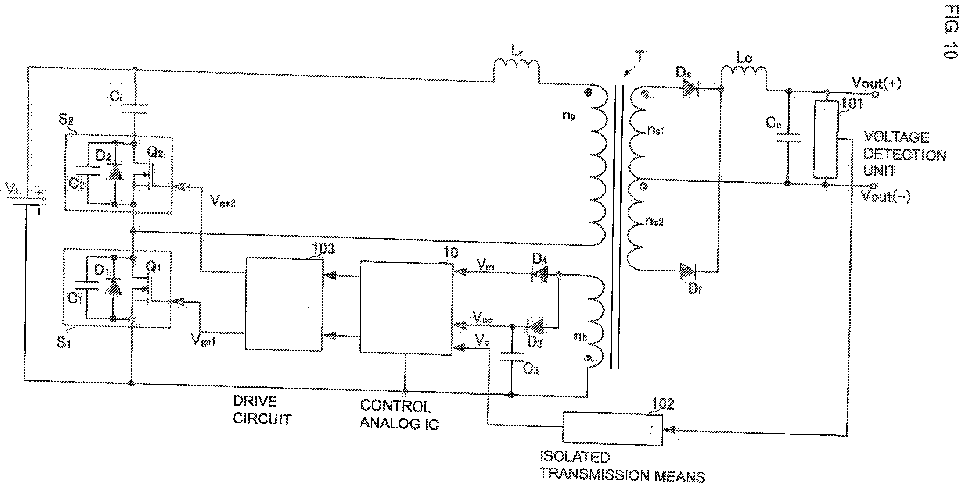

Next, a switching power supply according to a fourth embodiment will be described with reference to a drawing. Fig. 10 is the circuit diagram of a switching power supply according to the present embodiment.

As illustrated in Fig. 10, in the switching power supply according to the present embodiment, a circuit pattern on the primary side of the transformer T and the isolated transmission means 102 are the same as those in the above-mentioned switching power supply illustrated in Fig. 1, and the transformer T and a circuit pattern on a secondary side are different from those in the above-mentioned switching power supply illustrated in Fig. 1.

The transformer T is a composite-type transformer in which two secondary windings ns1 and ns2 are disposed with respect to one primary winding np. The first secondary winding ns1 of the transformer T is wound with the polarity thereof being the same as the primary winding np, and the second secondary winding ns2 is also wound with the polarity thereof being the same as the primary winding np.

The anode of the diode Ds is connected to one end portion of the first secondary winding ns1, and the cathode of the corresponding diode Ds is connected to the voltage output terminal Vout(+) through the inductor Lo. The other end portion of the first secondary winding ns1 is connected to the voltage output terminal Vout(-).

One end portion of the second secondary winding ns2 is connected to the other end portion of the first secondary winding ns1. The cathode of the diode Df is connected to the other end portion of the second secondary winding ns2, and the anode of the corresponding diode Df is also connected to the voltage output terminal Vout(+) through the inductor Lo.

In addition, a capacitor Co is connected between both terminals of the voltage output terminals Vout(+) and Vout(-). According to such a configuration as described above, a rectification smoothing circuit based on the diodes Ds and Df, the inductor Lo, and the capacitor Co is formed. In addition, a voltage detection unit 101 including a series resistance circuit and the like is connected between both terminals of the voltage output terminals Vout(+) and Vout(-), generates a detection voltage signal Vo according to an output voltage level between both terminals of the voltage output terminals Vout(+) and Vout(-), and outputs the detection voltage signal Vo to the isolated transmission means 102.

Using such a configuration, it is possible to configure a switching power supply utilizing a so-called center tap-type full-wave rectifier circuit. In addition, even in such a configuration, it is possible to apply the above-mentioned switching control illustrated in the first embodiment, and it is possible to obtain the same function effect.

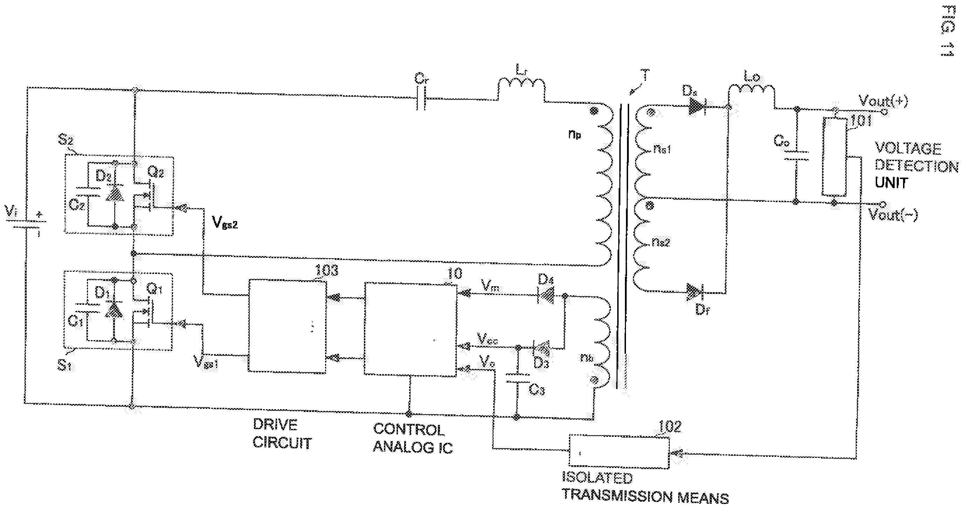

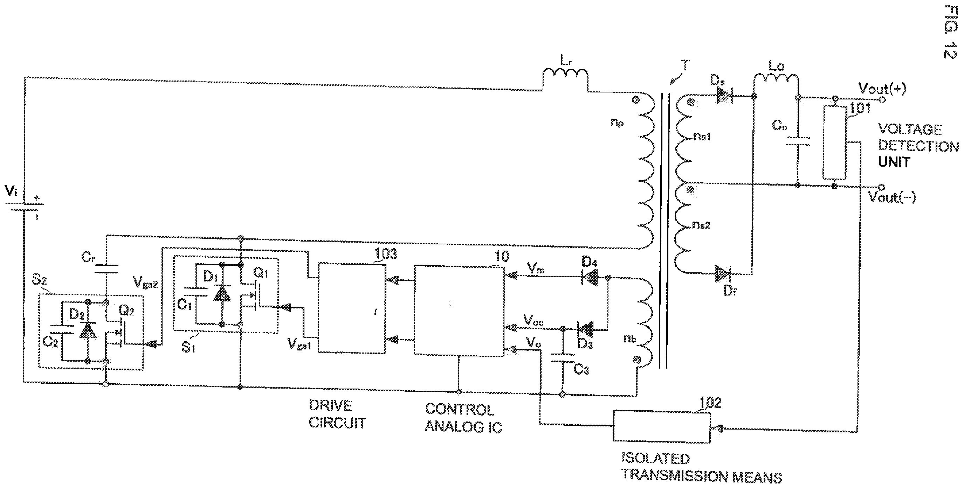

In addition, while, in the switching power supply in Fig. 10 according to the present embodiment, a case has been illustrated in which the capacitor Cr configuring a closed circuit along with the primary winding np, the inductor L1, and the switch circuit S2 is connected in parallel to the input power supply Vi on the primary side of the transformer T, a circuit configuration may be adopted in which the capacitor Cr is connected in series to the input power supply Vi, as illustrated in Fig. 11. Fig. 11 is the circuit diagram of a switching power supply including another circuit configuration illustrated in the fourth embodiment. In addition, as illustrated in Fig. 12, a circuit configuration may be adopted in which a series circuit including the second switch circuit S2 and the capacitor Cr is connected in parallel to the first switch circuit S1. Fig. 12 is the circuit diagram of a switching power supply including another circuit configuration illustrated in the fourth embodiment. Even in such a configuration, it is possible to apply the above-mentioned switching control, and it is possible to obtain the same function effect.

### [Fifth Embodiment]

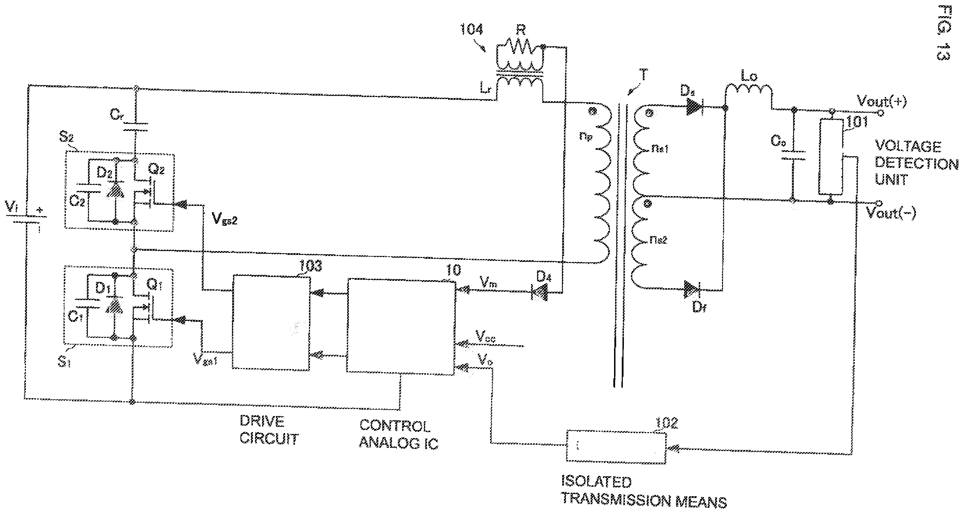

Next, a switching power supply according to a fifth embodiment will be described with reference to a drawing. Fig. 13 is the circuit diagram of a switching power supply according to the present embodiment.

As illustrated in Fig. 13, in the switching power supply according to the present embodiment, the transformer T, a circuit pattern on the secondary side of the transformer T, and the isolated transmission means 102 are the same as those in the switching power supply illustrated in Fig. 10 in the above-mentioned fourth embodiment, and a configuration is included in which the bias winding nb on the primary side is not disposed.

In the switching power supply according to the present embodiment, a current transformer circuit 104 is formed whose primary winding is the inductor Lr connected in series to the primary winding np. A resistance element R is connected to the secondary winding of the current transformer circuit 104, and one end portion of the corresponding resistance element R is connected to the anode of the diode D3. In addition, the cathode of the corresponding diode D3 is connected to the switch control analog IC 10, and hence the monitor signal Vm is supplied to the control analog IC 10.

By adopting such a configuration, it is possible to generate a monitor signal based on the change of magnetic flux due to a current flowing through the primary winding np of the transformer T. In addition, since such a configuration is adopted, by supplying the driving voltage Vcc of the control analog IC 10 from the outside or the like, it is possible to perform such switching control as illustrated in the above-mentioned embodiment even in a configuration in which no bias winding nb is used. In addition, while, in Fig. 13, a case has been illustrated in which the switching power supply uses the full-wave rectifier circuit based on the center tap method, it is possible to apply a configuration, in which the current transformer circuit of the present embodiment is used, even to a switching power supply based on another method illustrated in each of the above-mentioned embodiments.

### [Sixth Embodiment]

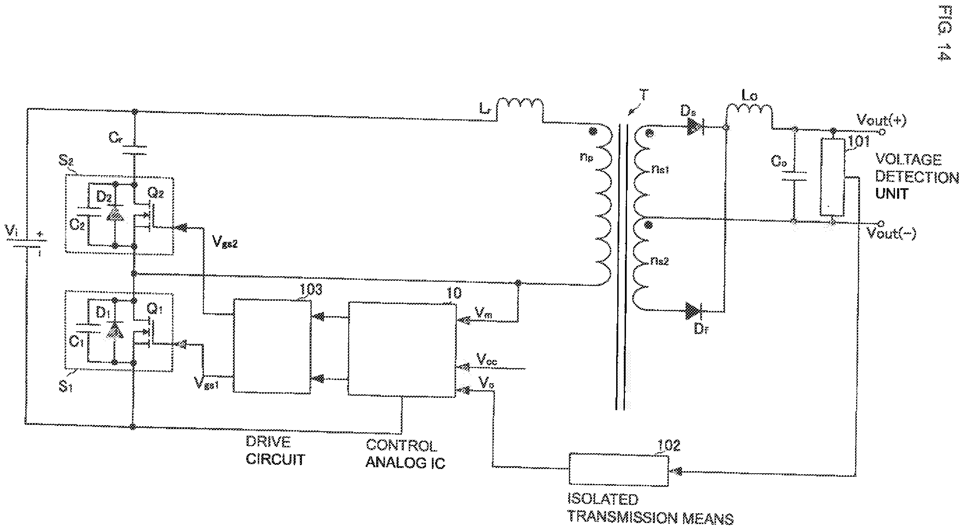

Next, a switching power supply according to a sixth embodiment will be described with reference to a drawing. Fig. 14 is the circuit diagram of a switching power supply according to the present embodiment.

As illustrated in Fig. 14, in the switching power supply according to the present embodiment, the transformer T, a circuit pattern on the secondary side of the transformer T, and the isolated transmission means 102 are the same as those in the switching power supply including a configuration in which the bias winding nb on the primary side is not disposed, illustrated in Fig. 13 in the above-mentioned fifth embodiment.

Furthermore, the switching power supply of the present embodiment does not use the current transformer circuit illustrated in Fig. 13 in the above-mentioned fifth embodiment. Therefore, the switching power supply of the present embodiment obtains the monitor signal Vm from one end portion of the primary winding np through a resistor voltage-dividing circuit not illustrated.

Even in such a configuration, when the driving voltage Vcc of the control analog IC 10 can be supplied from the outside or the like, it is possible to perform such switching control as illustrated in the above-mentioned embodiment, using no bias winding nb. In addition, while, in Fig. 14, a case has been illustrated in which the switching power supply uses the full-wave rectifier circuit based on the center tap method, it is possible to apply the configuration of the present embodiment even to a switching power supply based on another method illustrated in each of the above-mentioned embodiments.

### [Seventh Embodiment]

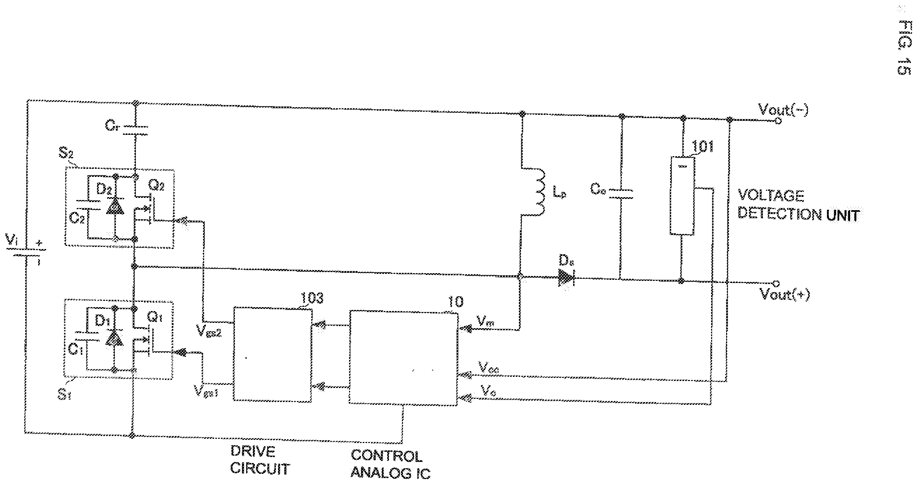

Next, a switching power supply according to a seventh embodiment will be described with reference to a drawing. Fig. 15 is the circuit diagram of a switching power supply according to the present embodiment.

While, in each of the above-mentioned embodiments, the isolated-type switching power supply utilizing the transformer T has been illustrated as an example, in the present embodiment, a case in which the above-mentioned switching control is applied to an non-isolated-type converter will be described as an example.

The voltage output terminal Vout(-) is connected to one end portion (Vi(+)) of the input power supply Vi, to which the direct-current input voltage is applied. The other end portion (Vi(-)) of the input power supply Vi is connected to the voltage output terminal Vout(+) through a series circuit including the first switch circuit Q1 and the diode Ds.

An inductor Lp is connected on an input power supply Vi side with respect to the diode Ds between both terminals of the voltage output terminals Vout(+) and Vout(-), and furthermore, the capacitor Co is connected on voltage output terminals Vout(+) and Vout(-) sides with respect to the diode Ds. In addition, a series circuit including the capacitor Cr and the second switch circuit S2 is connected in parallel to the inductor Lp on an input power supply Vi side of the inductor Lp.

The first switch circuit S1 includes the first switching element Q1 in which an FET is included, the diode D1, and the capacitor C1. The diode D1 and the capacitor C1 are connected in parallel between the drain and the source of the first switching element Q1, and may be replaced with a parasitic diode and a parasitic capacitance of the first switching element Q1 that is an FET. The first switching element Q1 performs an on-off operation on the basis of the first switching control signal Vgs1 supplied from the control analog IC 10 through the drive circuit 103.

The second switch circuit S2 includes the second switching element Q2 in which an FET is included, the capacitor C2, and the diode D2. The diode D2 and the capacitor C2 are connected in parallel between the drain and the source of the second switching element Q2, and may be replaced with a parasitic diode and a parasitic capacitance of the second switching element Q2 that is an FET. The second switching element Q2 performs an on-off operation on the basis of the second switching control signal Vgs2 supplied from the control analog IC 10 through the drive circuit 103.

In addition, the voltage detection unit 101 including a series resistance circuit and the like is connected between both terminals of the voltage output terminals Vout(+) and Vout(-). The voltage detection unit 101 generates the detection voltage signal Vo according to an output voltage level between both terminals of the voltage output terminals Vout(+) and Vout(-) and supplies the detection voltage signal Vo to the control analog IC 10.

In addition, the output voltage between the voltage output terminals Vout(+) and Vout(-) is supplied to the control analog IC 10, as the driving voltage Vcc of the control analog IC 10.

As illustrated in the above-mentioned embodiment, the control analog IC 10 is driven using the driving voltage Vcc, and, on the basis of the monitor signal Vm and the detection voltage signal Vo from the voltage detection unit 101, generates the first switching control signal Vgs1 and the second switching control signal Vgs2 so that the output voltage is controlled to become a predetermined voltage level.

The drive circuit 103 inputs and boosts the first switching control signal Vgs1 and the second switching control signal Vgs2 into signals whose levels can drive at least the second switching element Q2. The drive circuit 103 outputs the first switching control signal Vgs1 to the first switching element Q1 and outputs the second switching control signal Vgs2 to the second switching element Q2

By adopting such a configuration, it is possible to configure a non-isolated-type buck-boost converter that is called a so-called polarity-reversed chopper circuit and in which the first switching element Q1 of the first switch circuit S1 is used as a control-use switching element and the second switching element Q2 of the second switch circuit S2 and the capacitor Cr are used as a clamp circuit. In addition, even in such a configuration, using the above-mentioned switching control, it is possible to realize a non-isolated-type buck-boost converter having a high degree of reliability and a high degree of efficiency.

In addition, in the same way as the above-mentioned isolated type, even such a non-isolated type as the present embodiment may be applied to a structure in which the capacitor Cr connected in series to the second switch circuit S2 is connected in series to the input power supply Vi and the inductor Lp, or a structure in which the series circuit including the second switch circuit S2 and the capacitor Cr is connected in parallel to the first switch circuit S1.

### [Eighth Embodiment]

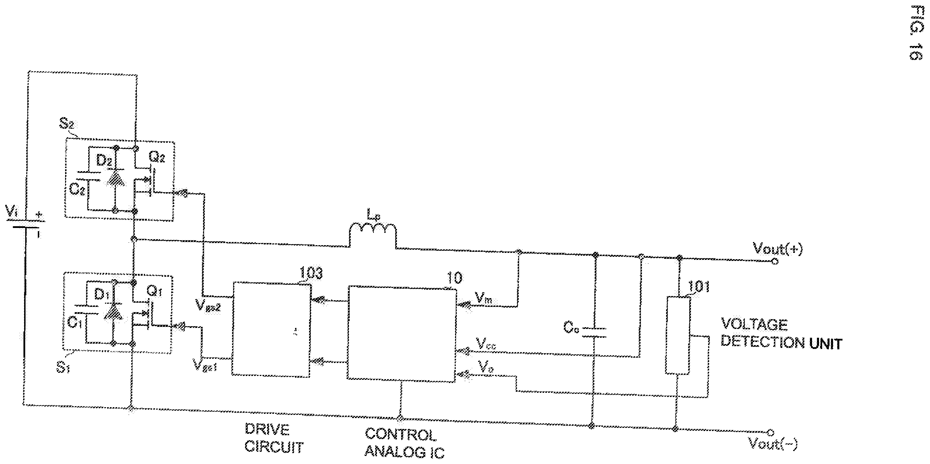

Next, a switching power supply according to an eighth embodiment will be described with reference to a drawing. Fig. 16 is the circuit diagram of a switching power supply according to the present embodiment.

In the present embodiment, in the same way as the switching power supply illustrated in the seventh embodiment, a case in which the above-mentioned switching control is applied to a non-isolated-type converter will be described as an example.

The voltage output terminal Vout(+) is connected to one end portion (Vi(+)) of the input power supply Vi, to which the direct-current input voltage is applied, through a series circuit including the second switch circuit Q2 and the inductor Lp. On the other hand, the other end portion (Vi(-)) of the input power supply Vi is connected to the voltage output terminal Vout(-).

The second switch circuit S2 includes the second switching element Q2 in which an FET is included, the diode D2, and the capacitor C2. The diode D2 and the capacitor C2 are connected in parallel between the drain and the source of the second switching element Q2, and may be replaced with a parasitic diode and a parasitic capacitance of the second switching element Q2 that is an FET. The second switching element Q2 performs an on-off operation on the basis of the second switching control signal Vgs2 supplied from the control analog IC 10 through the drive circuit 103.

The first switch circuit S1 is connected between a connection point between the second switch circuit S2 and the inductor Lp and the voltage output terminal Vout(-).

The first switch circuit S1 includes the first switching element Q1 in which an FET is included, the diode D1, and the capacitor C1. The diode D1 and the capacitor C1 are connected in parallel between the drain and the source of the first switching element Q1, and may be replaced with a parasitic diode and a parasitic capacitance of the first switching element Q1 that is an FET. The first switching element Q1 performs an on-off operation on the basis of the first switching control signal Vgs1 supplied from the control analog IC 10 through the drive circuit 103.

In addition, the capacitor Co is connected on voltage output terminals Vout(+) and Vout(-) sides with respect to the inductor Lp between both terminals of the voltage output terminals Vout(+) and Vout(-).

In addition, the voltage detection unit 101 including a series resistance circuit and the like is connected between both terminals of the voltage output terminals Vout(+) and Vout(-). The voltage detection unit 101 generates the detection voltage signal Vo according to an output voltage level between both terminals of the voltage output terminals Vout(+) and Vout(-), and outputs the detection voltage signal Vo to the control analog IC 10.

In addition, the output voltage between the voltage output terminals Vout(+) and Vout(-) is supplied to the control analog IC 10, as the driving voltage Vcc of the control analog IC 10.

As illustrated in the above-mentioned embodiment, the control analog IC 10 is driven using the driving voltage Vcc, and, on the basis of a first monitor signal Vm1, a second monitor signal Vm2, and the detection voltage signal Vo from the voltage detection unit 101, generates the first switching control signal Vgs1 and the second switching control signal Vgs2 so that the output voltage is controlled to become a predetermined voltage level.

The drive circuit 103 inputs and boosts the first switching control signal Vgs1 and the second switching control signal Vgs2 into signals whose levels can drive at least the second switching element Q2. The drive circuit 103 outputs the first switching control signal Vgs1 to the first switching element Q1 and outputs the second switching control signal Vgs2 to the second switching element Q2.

By adopting such a configuration, it is possible to configure a so-called half-bridge-type non-isolated buck converter in which the second switching element Q2 of the second switch circuit S2 is used as a control-use switching element and the first switching element Q1 of the first switch circuit S1 is used in place of an diode. In addition, even in such a configuration, using the above-mentioned switching control, it is possible to realize a non-isolated-type buck converter having a high degree of reliability and a high degree of efficiency.

### [Ninth Embodiment]

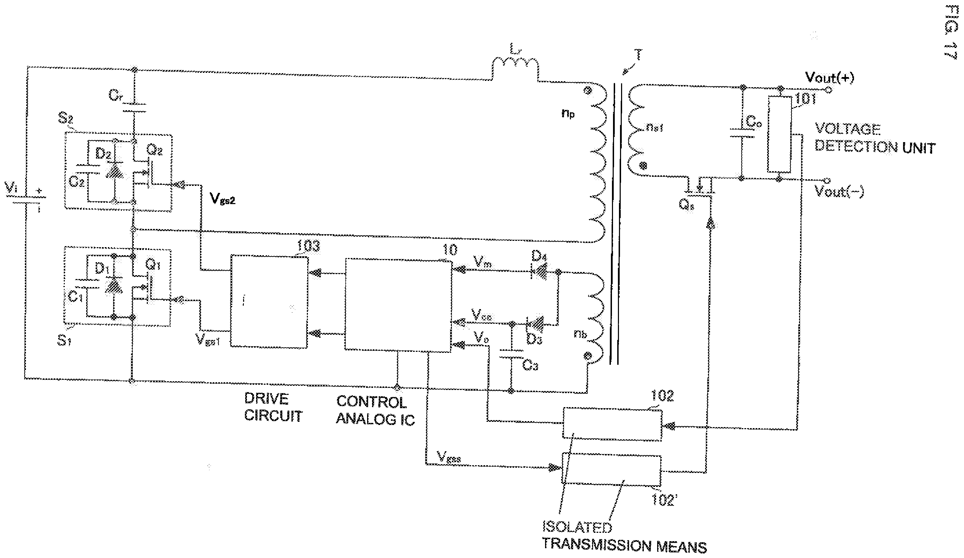

Next, a switching power supply according to a ninth embodiment will be described with reference to drawings. Fig. 17 is the circuit diagram of a switching power supply according to the present embodiment.

The switching power supply according to the present embodiment corresponds to a switching power supply in which the diode Ds on the secondary side is replaced with a switching element Qs in the flyback-method switching power supply illustrated in Fig. 1 in the first embodiment. In such a configuration, the control analog IC 10 also generates a switch control signal Vgss for the switching element Qs in addition to the first switching element Q1 of the first switch circuit S1 and the second switching element Q2 of the second switch circuit S2. At this time, the control analog IC 10 generates the switch control signal Vgss so that the switching element Qs operates in the same way as the diode Ds illustrated in the first embodiment. In this way, the switch control signal Vgss generated in the control analog IC 10 is supplied to the switching element Qs through second isolated transmission means 102'. In addition, in the same way as the first switching control signal Vgs1 and the second switching control signal Vgs2, after being boosted by a drive circuit or the like as necessary, the switch control signal Vgss is supplied to the switching element Qs.

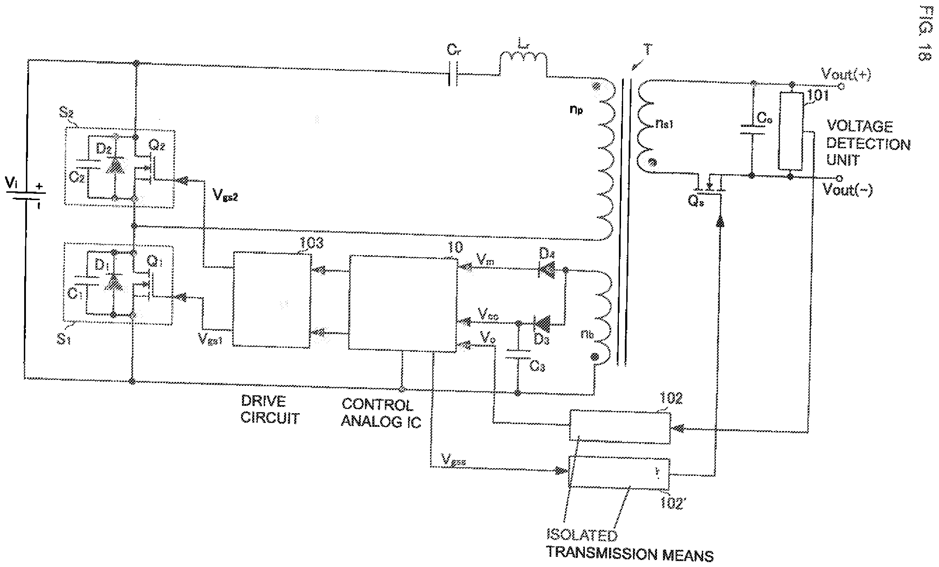

In addition, in the present embodiment, in the same way as the above-mentioned first embodiment, a circuit configuration may also be adopted in which the capacitor Cr is connected in series to the input power supply vi, as illustrated in Fig. 18, Fig. 18 is the circuit diagram of a switching power supply including another circuit configuration illustrated in the ninth embodiment.

Even in these configurations, it is possible to apply the switching control illustrated in the above-mentioned embodiment, and it is possible to obtain the same function effect.

### [Tenth Embodiment]

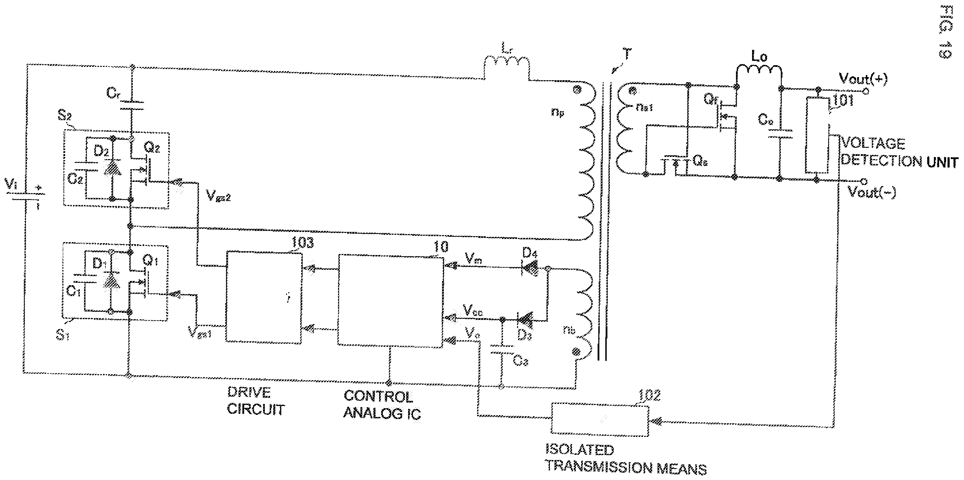

Next, a switching power supply according to a tenth embodiment will be described with reference to a drawing. Fig. 19 is the circuit diagram of a switching power supply according to the present embodiment.

The switching power supply according to the present embodiment corresponds to a switching power supply in which the diode Ds on the secondary side is replaced with a switching element Qs and the diode Df is replaced with a switching element Qf in the forward-method switching power supply illustrated in Fig. 6 in the second embodiment. In such a configuration, the switching element Qs corresponding to a rectification-side synchronous rectifying element and the switching element Qf corresponding to a commutation-side synchronous rectifying element configure a self-driven synchronous rectifying circuit in which on-off operations are complementarily performed in response to the change of magnetic flux in the secondary winding ns of the transformer T.

Even in these configurations, it is possible to apply the switching control illustrated in the above-mentioned embodiment, and it is possible to obtain the same function effect.

### [Eleventh Embodiment]

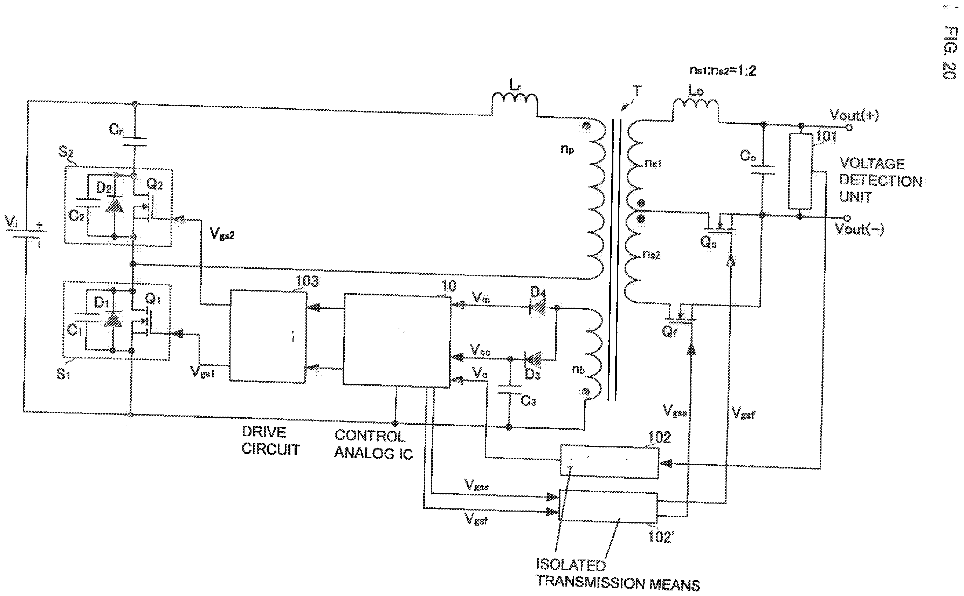

Next, a switching power supply according to an eleventh embodiment will be described with reference to drawings. Fig. 20 is the circuit diagram of a switching power supply according to the present embodiment.

The switching power supply according to the present embodiment corresponds to a switching power supply in which the diode Ds on the secondary side is replaced with the switching element Qs and the diode Df is replaced with the switching element Qf in the switching power supply illustrated in Fig. 7 in the third embodiment. In such a configuration, the control analog IC 10 also generates a switch control signal Vgss for the switching element Qs and a switch control signal Vgsf for the switching element Qf in addition to the first switching element Q1 of the first switch circuit S1 and the second switching element Q2 of the second switch circuit S2. At this time, the control analog IC 10 generates the switch control signal Vgss so that the switching element Qs operates in the same way as the diode Ds illustrated in the first embodiment. In addition, the control analog IC 10 generates the switch control signal Vgsf so that the switching element Qf operates in the same way as the diode Df illustrated in the first embodiment. In this way, the switch control signals Vgss and Vgsf generated in the control analog IC 10 are supplied to the switching elements Qs and Qf through the second isolated transmission means 102'. In addition, in the same way as the first switching control signal Vgs1 and the second switching control signal Vgs2, after being boosted by a drive circuit or the like as necessary, the switch control signals Vgss and Vgsf are supplied to the switching elements Qs and Qf.

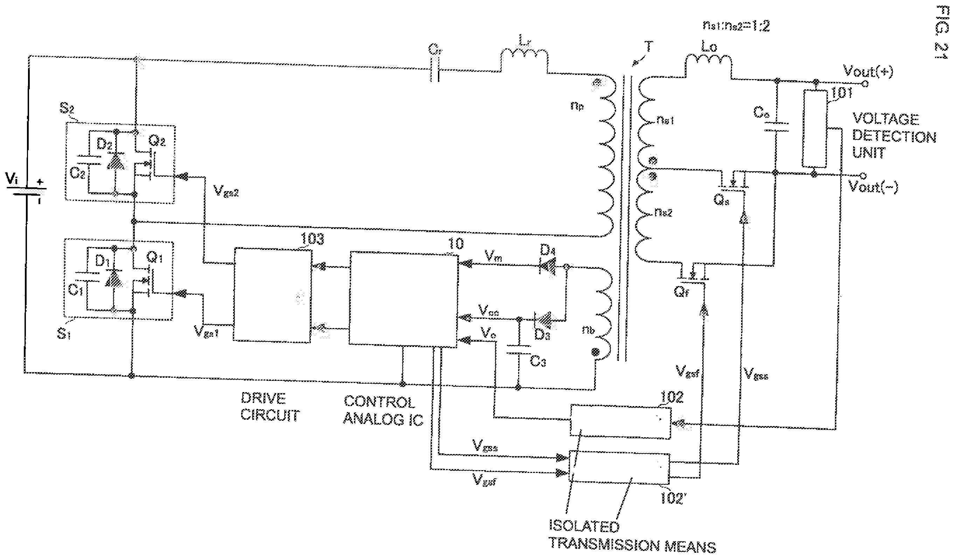

In addition, in the present embodiment, in the same way as the above-mentioned third embodiment, a circuit configuration may also be adopted in which the capacitor Cr is connected in series to the input power supply Vi, as illustrated in Fig. 21. Fig. 21 is the circuit diagram of a switching power supply including another circuit configuration illustrated in the eleventh embodiment.

Even in these configurations, it is possible to apply the switching control illustrated in the above-mentioned embodiment, and it is possible to obtain the same function effect.

### [Twelfth Embodiment]

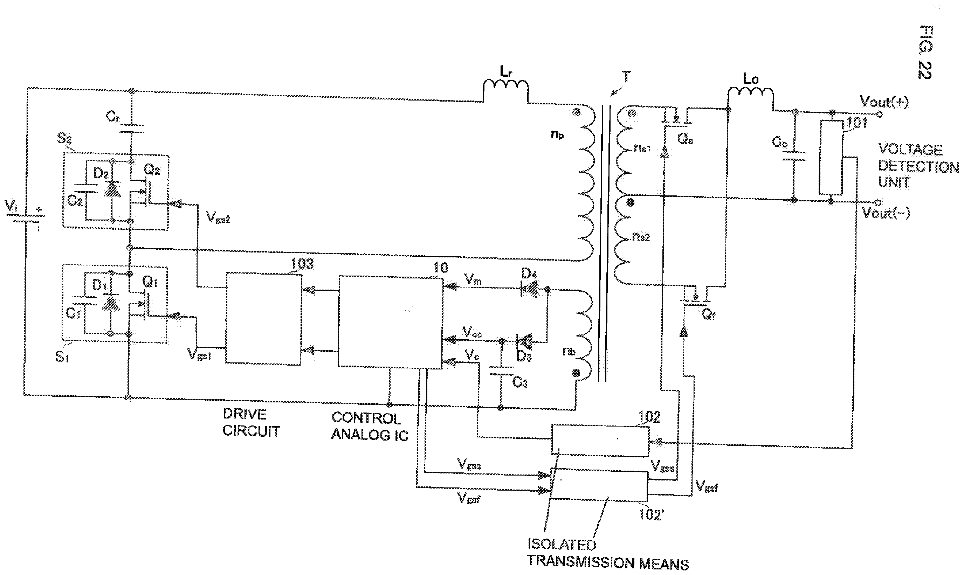

Next, a switching power supply according to a twelfth embodiment will be described with reference to drawings. Fig. 22 is the circuit diagram of a switching power supply according to the present embodiment.

The switching power supply according to the present embodiment corresponds to a switching power supply in which the diode Ds on the secondary side is replaced with the switching element Qs and the diode Df is replaced with the switching element Qf in the switching power supply including the center tap-type full-wave rectifier circuit, illustrated in Fig. 10 in the fourth embodiment. In such a configuration, the control analog IC 10 also generates the switch control signal Vgss for the switching element Qs and the switch control signal Vgsf for the switching element Qf in addition to the first switching element Q1 of the first switch circuit S1 and the second switching element Q2 of the second switch circuit S2. At this time, the control analog IC 10 generates the switch control signal Vgss so that the switching element Qs operates in the same way as the diode Ds illustrated in the first embodiment. In addition, the control analog IC 10 generates the switch control signal Vgsf so that the switching element Qf operates in the same way as the diode Df illustrated in the first embodiment. In this way, the switch control signals Vgss and Vgsf generated in the control analog IC 10 are supplied to the switching elements Qs and Qf through the second isolated transmission means 102'. In addition, in the same way as the first switching control signal Vgs1 and the second switching control signal Vgs2, after being boosted by a drive circuit or the like as necessary, the switch control signals Vgss and Vgsf are supplied to the switching elements Qs and Qf.

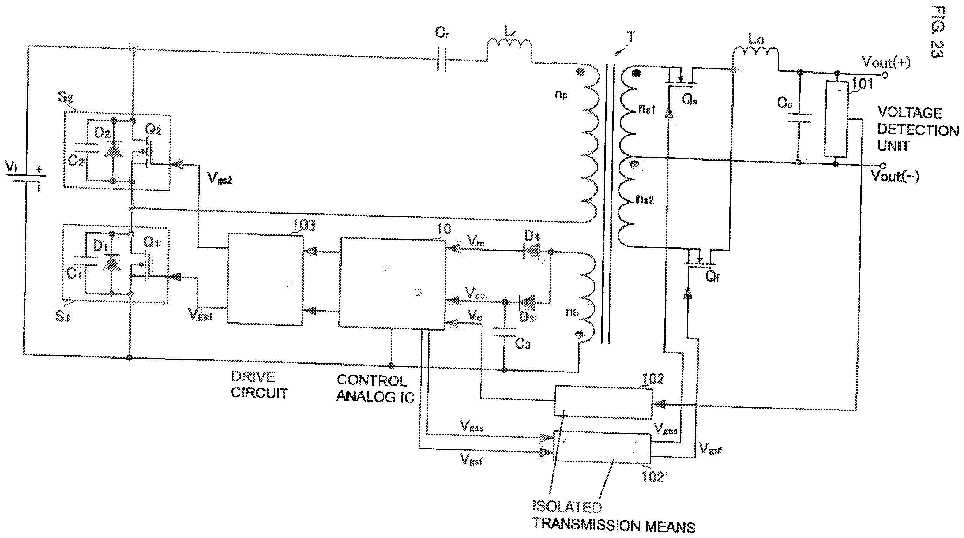

In addition, in the present embodiment, in the same way as the above-mentioned fourth embodiment, a circuit configuration may also be adopted in which the capacitor Cr is connected in series to the input power supply Vi, as illustrated in Fig. 23. Fig. 23 is the circuit diagram of a switching power supply including another circuit configuration illustrated in the twelfth embodiment.

Even in these configurations, it is possible to apply the switching control illustrated in the above-mentioned embodiment, and it is possible to obtain the same function effect.

### [Thirteenth Embodiment]

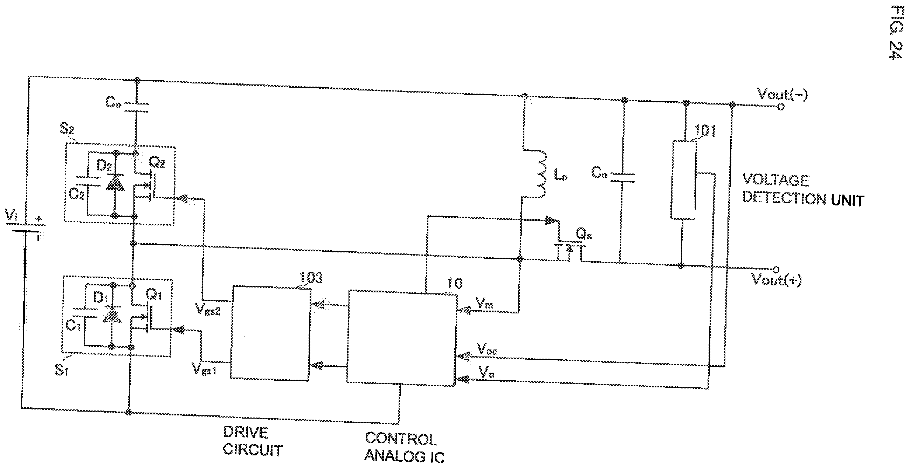

Next, a switching power supply according to a thirteenth embodiment will be described with reference to a drawing. Fig. 24 is the circuit diagram of a switching power supply according to the present embodiment.

The switching power supply according to the present embodiment corresponds to a switching power supply in which the diode Ds on the primary side is replaced with the switching element Qs in the non-isolated-type buck-boost converter illustrated in Fig. 15 in the seventh embodiment.

In such a configuration, the control analog IC 10 also generates the switch control signal Vgss for the switching element Qs in addition to the first switching element Q1 of the first switch circuit S1 and the second switching element Q2 of the second switch circuit S2. At this time, the control analog IC 10 generates the switch control signal Vgss so that the switching element Qs operates in the same way as the diode Ds illustrated in the seventh embodiment. In this way, the switch control signal Vgss generated in the control analog IC 10 is supplied to the switching element Qs. In addition, in the same way as the first switching control signal Vgs1 and the second switching control signal Vgs2, after being boosted by a drive circuit or the like as necessary, the switch control signal Vgss is supplied to the switching element Qs.

Even in such a configuration, it is possible to apply the switching control illustrated in the above-mentioned embodiment, and it is possible to obtain the same function effect.

In addition, the above-mentioned individual embodiments illustrate representative circuit examples to which the switching control of the present invention is applicable, and it should be understood that a switching power supply including a circuit that can be easily analogized from the combination of these embodiments or the like can also deservingly obtain such a function effect as described above.

In addition, while, in the above-mentioned embodiments, examples have been illustrated using the monitor signal based on the change of the voltage between the drain and source of the switching element, a Hall sensor may also be provided in the transmission line connecting the switching element Q1 and the switching element side of the primary winding np to each other, and an output from the corresponding Hall sensor may also be used an monitor signal, for example, in the configuration of the primary side circuit of the first embodiment. Accordingly, it is also possible to generate a monitor signal based on the change of a current flowing through the switching element.

In addition, while, in each of the above-mentioned embodiments, an example has been illustrated in which two threshold values used for the first switching control signal Vgs1 and the second switching control signal Vgs2 are set with respect to one monitor signal, a monitor signal may also be set with respect to each switching control signal and a threshold value may also be set for each monitor signal. At this time, in a form in which a bias winding is disposed, an output from the bias winding may also be used as a monitor signal.

In addition, while, in the above description, the turn off timings of the individual switching elements, namely, the on-times of the individual switching elements, are given on the basis of the periodicity of the saw-tooth wave signal Vchp, the maximum value of the on-time may also be restricted by detecting a current flowing through the transformer T or the inductor Lp or a current flowing through the switching element. Accordingly, it is possible to prevent an overcurrent from flowing in the above-mentioned switching control.

### Reference Signs List

- 10, 10, 20, 30, 40, 50: control analog IC
- 110, 111, 112, 120: comparator
- 113, 130: inverter
- 114, 115: AND circuit
- 114, 115, 151, 152: delay circuit
- 153, 154: OR circuit
- 124, 125: flip flop circuit
- 101: voltage detection unit
- 102, 102': isolated transmission means
- 103: drive circuit
- 104: current transformer circuit

## Claims

1. A switching power supply apparatus including
a direct-current power-supply input unit to which a direct-current input voltage (Vi) is input,
a transformer (T) being configured by one magnetic component and including at least a first primary winding (np) and a first secondary winding (ns1), magnetically coupled,
an inductor (Lr) connected in series to the first primary winding (np),
a first switch circuit (S1) including a parallel circuit of a first switching element (Q1), a first capacitor (C1), and a first diode (D1),
a second switch circuit (S2) including a parallel circuit of a second switching element (Q2), a second capacitor (C2), and a second diode (D2),
a third capacitor (Cr),
a first series circuit that is connected to both end portions of the direct-current power-supply input unit and in which the first primary winding (np) and the first switch circuit (S1) are connected in series, and
a second series circuit that is connected to both end portions of the first switch circuit (S1) or both end portions of the first primary winding (np) and in which the second switch circuit (S2) and the third capacitor (Cr) are connected in series, wherein
the first switch circuit (S1) and the second switch circuit (S2) are configured so as to operate so that the first switch circuit (S1) and the second switch circuit (S2) complementarily repeat turnon and turnoff with a time period in between, for which both the first switch circuit (S1) and the second switch circuit (S2) are turned off, and
the switching power supply apparatus includes a power converter circuit configured so that an output voltage (Vout) is output to a secondary side through a first rectification smoothing circuit rectifying and smoothing an alternating-current voltage output from the first secondary winding (ns1), the switching power supply apparatus comprising:
first monitor signal generation means for detecting the change of a voltage or current in the power converter circuit, which occurs owing to the turnoff of a switch circuit in an on-state from among the first switch circuit (S1) and the second switch circuit (S2), and generating a monitor signal;
output voltage detection means for detecting the output voltage (Vout);
feedback signal generating means for generating a feedback signal according to the output voltage (Vout) detected by the output voltage detection means; and
a switching control circuit controlling the first switching element (Q1) and the second switching element (Q2), **characterized in that** the switching control circuit includes an oscillator generating a triangular wave whose frequency is settable and nearly constant,
a first comparator comparing the triangular wave signal with the feedback signal, and a second comparator comparing an output signal of the first monitor signal generation means with a first threshold value, wherein a gate signal of the first switch circuit (S1) and a gate signal of the second switch circuit (S2) are generated on the basis of outputs of the first comparator and the second comparator,
wherein the feedback signal is used to obtain the turn off timing according to the level of the output voltag (Vout)
and the switching control circuit is arranged to generate a first switching control signal (Vgs1) and a second switching control signal (Vgs2) with maintaining a constant switching period (Ts) so that a desired output voltage level is obtained.

2. The switching power supply apparatus according to Claim 1, wherein
a magnetic polarity of the first primary winding (np) and the first secondary winding (ns1) is a reverse polarity with respect to a direction of a current flowing when the first switch circuit (S1) is in a conduction state or the second switch circuit (S2) is in a conduction state.

3. The switching power supply apparatus according to Claim 1, wherein
a magnetic polarity of the first primary winding (np) and the first secondary winding (ns1) is a same polarity with respect to a direction of a current flowing when the first switch circuit (S1) is in a conduction state or the second switch circuit (S2) is in a conduction state.

4. The switching power supply apparatus according to Claim 1, wherein
the transformer (T) further includes a second secondary winding (ns2), the first secondary winding (ns1) and the second secondary winding (ns2) are connected in series, and a magnetic polarity of the first primary winding (np) and the first secondary winding (ns1) and a magnetic polarity of the first primary winding (np) and the second secondary winding (ns2) are same polarities with respect to a direction of a current flowing when the first switch circuit (S1) is in a conduction state or the second switch circuit (S2) is in a conduction state, and
the first rectification smoothing circuit includes a center tap-type full-wave rectifier circuit, at least one filter inductor (Lo), and at least one smoothing capacitor (Co).

5. The switching power supply apparatus according to Claim 1, wherein
the transformer (T) further includes a second secondary winding (ns2), the first secondary winding (ns1) and the second secondary winding (ns2) are connected in series, and a magnetic polarity of the first primary winding (np) and the first secondary winding (ns1) is a reverse polarity and a magnetic polarity of the first primary winding (np) and the second secondary winding (ns2) is a same polarity, with respect to a direction of a current flowing when the first switch circuit (S1) is in a conduction state or the second switch circuit (S2) is in a conduction state, and
in the first rectification smoothing circuit, cathode sides of rectifying elements are connected to both end portions of the second secondary winding (ns2), respectively, anode sides of the rectifying elements are subjected to common connection, one end portion of at least one filter inductor (Lo) is connected to the other end portion of the first secondary winding (ns1), and at least one smoothing capacitor (Co) is connected between the other end portion of the filter inductor (Lo) and the anodes of the rectifying elements.

6. The switching power supply apparatus according to any one of Claims 1 to 5, wherein
a primary-side leakage flux of the transformer (T) is used as the inductor (Lr).

7. The switching power supply apparatus according to any one of Claims 1 to 6, wherein
a secondary-side leakage flux of the transformer (T) is used as the filter inductor (Lo).

8. The switching power supply apparatus according to any one of Claims 1 to 7 wherein
a turn ratio between the first secondary winding (ns1) and the second secondary winding (ns2) is 1 : 2.

9. The switching power supply apparatus according to any one of Claims 1 to 8, wherein
the transformer (T) further includes a second primary winding (nb), one end portion of the second primary winding (nb) is connected on a low electrical potential side of the direct-current input power supply (Vi), and the other end portion thereof is supplied as a direct-current power-supply voltage used for the switching control circuit through a second rectification smoothing circuit.

10. The switching power supply apparatus according to any one of claims 1 to 9, wherein
the rectifying element of the first rectification smoothing circuit is a field-effect transistor.

11. The switching power supply apparatus according to any one of Claims 1 to 10, wherein
the rectifying element of the first rectification smoothing circuit is subjected to on-off control by the switching control circuit.

12. A switching power supply apparatus including
a direct-current power-supply input unit to which a direct-current input voltage (Vi) is input,
an inductor Lp configured by one magnetic component,
a first switch circuit (S1) including a parallel circuit of a first switching element (Q1), a first capacitor (C1), and a first diode (D1), and
a second switch circuit (S2) including a parallel circuit of a second switching element (Q2), a second capacitor (C2), and a second diode (D2), wherein
a series circuit including the first switch circuit (S1) and the second switch circuit (S2) is connected to both end portions of the direct-current power-supply input unit,
the switching power supply apparatus is configured so that one end portion of the inductor (Lp) is connected to a connection point between the first switch circuit (S1) and the second switch circuit (S2) and, from the other end portion thereof, an output voltage Vout is output through a third capacitor (Co) connected in parallel to the first switch circuit (S1), and
the first switch circuit (S1) and the second switch circuit (S2) are configured so as to operate so that the first switch circuit (S1) and the second switch circuit (S2) complementarily repeat turnon and turnoff with a time period in between, for which both the first switch circuit (S1) and the second switch circuit (S2) are turned off, the switching power supply apparatus comprising:
first monitor signal generation means for detecting the change of a voltage or current in the power converter circuit, which occurs owing to the turnoff of a switch circuit in an on-state from among the first switch circuit (S1) and the second switch circuit (S2), and generating a monitor signal;
output voltage detection means for detecting the output voltage (Vout);
feedback signal generating means for generating a feedback signal according to the output voltage (Vout) detected by the output voltage detection means; and
a switching control circuit controlling the first switching element (Q1) and the second switching element (Q2), **characterized in that** the switching control circuit includes an oscillator generating a triangular wave whose frequency is settable and nearly constant,
a first comparator comparing the triangular wave signal with the feedback signal, and a second comparator comparing an output signal of the first monitor signal generation
means with a first threshold value, wherein a gate signal of the first switch circuit (S1) and a gate signal of the second switch circuit (S2) are generated on the basis of outputs of the first comparator and the second comparator, wherein
the feedback signal is used to obtain the turn off timing according to the level of the output voltag (Vout)
and the switching control circuit is arranged to generate a first switching control signal (Vgs1) and a second switching control signal (Vgs2) with maintaining a constant switching period (Ts) so that a desired output voltage level is obtained.

13. The switching power supply apparatus according to any one of Claims 1 to 12, wherein
the switching control circuit further includes a third comparator comparing an output signal of the first monitor signal generation means with a second threshold value, wherein the gate signal of the first switch circuit (S1) is generated on the basis of the outputs of the first comparator and the second comparator, and the gate signal of the second switch circuit (S2) is generated on the basis of the outputs of the first comparator and the third comparator.

14. The switching power supply apparatus according to any one of Claims 1 to 13, wherein
by replacing the second comparator and the third comparator with one hysteresis comparator, the first threshold value and the second threshold value are specified.

15. The switching power supply apparatus according to any one of Claims 1 to 14, wherein
a maximum value of an on-time of a pulse width from a time when a signal for turning on one of the first switching element (Q1) and the second switching element (Q2) is output to a time when an output signal for turning off the corresponding switching element is generated is restricted
to less than a period of the oscillator generating the triangular wave.

16. The switching power supply apparatus according to any one of Claims 1 to 15, wherein
a current flowing through the transformer (T) or the inductor (Lp) in the power converter circuit or a current flowing through a switching element is detected, and by restricting a maximum value of the on-time, an overcurrent is prevented from flowing.

17. The switching power supply apparatus according to any one of claims 1 to 16 wherein
the first switch circuit (S1) or the second switch circuit (S2) is a field-effect transistor.

18. The switching power supply apparatus according to any one of Claims 1 to 17, wherein
the first switch circuit (S1) or the second switch circuit (S2) is driven by a zero voltage switching operation in which, after voltages of both end portions of the switch circuit have been decreased to 0 V or the vicinity of 0 V, the switching element (Q1) or (Q2) is turned on.

19. The switching power supply apparatus according to any one of Claims 1 to 18, wherein
the first monitor signal generation means is a current transformer used for detecting a current flowing through the inductor (Lr).

20. The switching power supply apparatus according to any one of Claims 1 to 19, wherein
the first monitor signal generation means utilizes the change of a drain-to-source voltage of at least one of the first switching element (Q1) and the second switching element (Q2).

21. The switching power supply apparatus according to any one of Claims 1 to 20, wherein
the first monitor signal generation means utilizes the change of a drain-to-source current of at least one of the first switching element (Q1) and the second switching element (Q2).

22. The switching power supply apparatus according to any one of claims 1 to 21, wherein
the first monitor signal generation means utilizes the change of a voltage occurring between both end portions of the second primary winding (nb).

## Patentansprüche

1. Schaltnetzteilvorrichtung, aufweisend:
eine Gleichstromzufuhr-Eingangseinheit, an der eine Gleichstrom-Eingangsspannung (Vi) eingegeben wird,
einen Transformator (T), der durch eine Magnetkomponente ausgebildet ist zumindest eine erste Primärwicklung (np) und eine erste Sekundärwicklung (ns1), die magnetisch gekoppelt sind, aufweist,
einen Induktor (Lr), der mit der ersten Primärwicklung (np) in Reihe geschaltet ist,
einen ersten Schaltkreis (S1), der eine Parallelschaltung aus einem ersten Schaltelement (Q1), einem ersten Kondensator (C1), und einer ersten Diode (D1) aufweist,
einen zweiten Schaltkreis (S2), der eine Parallelschaltung aus einem zweiten Schaltelement (Q2), einen zweiten Kondensator (C2), und einer zweiten Diode (D2) aufweist,
einen dritten Kondensator (Cr),
eine erste Reihenschaltung, die mit beiden Endabschnitten der Gleichstromzufuhr-Eingangseinheit verbunden ist und bei der die erste Primärwicklung (np) und der erste Schaltkreis (S1) in Reihe geschaltet sind, und
eine zweite Reihenschaltung, die mit beiden Endabschnitten des ersten Schaltkreises (S1) oder beiden Endabschnitten der ersten Primärwicklung (np) verbunden ist und bei der der zweite Schaltkreis (S2) und der dritte Kondensator (Cr) in Reihe geschaltet sind, wobei
der erste Schaltkreis (S1) und der zweite Schaltkreis (S2) eingerichtet sind, zu arbeiten, so dass der erste Schaltkreis (S1) und der zweite Schaltkreis (S2) komplementär ein Ein- und Ausschalten mit einer zwischen ihnen liegenden Zeitperiode wiederholen, in der sowohl der erste Schaltkreis (S1) als auch der zweite Schaltkreis (S2) ausgeschaltet sind, und
die Schaltnetzteilvorrichtung eine Stromwandlerschaltung aufweist, die eingerichtet ist, so dass eine Ausgangsspannung (Vout) an eine Sekundärseite durch eine erste Gleichrichter-Glättungsschaltung ausgegeben wird, die eine Wechselspannung, die von der ersten Sekundärwicklung (ns1) ausgegeben wird, gleichrichtet und glättet, wobei die Schaltnetzteilvorrichtung aufweist:
erste Überwachungssignal-Erzeugungsmittel zur Detektion der Änderung einer Spannung oder Stromstärke in der Stromwandlerschaltung, die aufgrund des Ausschaltens eines Schaltkreises in einem Ein-Zustand unter dem ersten Schaltkreis (S1) und dem zweiten Schaltkreis (S2) auftritt, und Erzeugen eines Überwachungssignals;
Ausgangsspannungs-Detektionsmittel zur Detektion der Ausgangsspannung (Vout);
Rückkopplungssignal-Erzeugungsmittel zur Erzeugung eines Rückkopplungssignals gemäß der Ausgangsspannung (Vout), die von dem Ausgangsspannungs-Detektionsmittel detektiert wird; und
eine Schaltsteuerschaltung, die das erste Schaltelement (Q1) und das zweite Schaltelement (Q2) steuern, **dadurch gekennzeichnet, dass** die Schaltsteuerschaltung einen Oszillator, der eine Dreieckwelle erzeugt,
deren Frequenz einstellbar und nahezu konstant ist,
einen ersten Komparator, der das Dreieckwellensignal mit dem Rückkopplungssignal vergleicht, und einen zweiten Komparator, der ein Ausgangssignal des ersten Überwachungssignal-Erzeugungsmittels mit einem ersten Grenzwert vergleicht, aufweist, wobei ein Gate-Signal des ersten Schaltkreises (S1) und ein Gate-Signal des zweiten Schaltkreises (S2) auf Grundlage der Ausgaben des ersten Komparators und des zweiten Komparators erzeugt werden, wobei das Rückkopplungssignal verwendet wird, den Ausschaltzeitpunkt gemäß dem Pegel der Ausgangsspannung (Vout) zu erhalten,
und die Schaltsteuerschaltung eingerichtet ist, eine erstes Schaltsteuersignal (Vgs1) und ein zweites Schaltsteuersignal (Ts) zu erzeugen, so dass ein gewünschter Ausgangsspannungspegel erhalten wird.

2. Schaltnetzteilvorrichtung nach Anspruch 1, wobei
eine magnetische Polarität der ersten Primärwicklung (np) und der ersten Sekundärwicklung (Ns1) eine umgekehrte Polarität in Bezug auf eine Richtung eines Strom ist, der fließt, wenn der erste Schaltkreis (S1) in einem leitenden Zustand ist oder der zweite Schaltkreis (S2) in einem leitenden Zustand ist.

3. Schaltnetzteilvorrichtung nach Anspruch 1, wobei
eine magnetische Polarität der ersten Primärwicklung (np) und der ersten Sekundärwicklung (ns1) eine gleiche Polarität in Bezug auf eine Richtung eines Stroms ist, der fließt, wenn der erste Schaltkreis (S1) in einem leitenden Zustand ist oder der zweite Schaltkreis (S2) in einem leitenden Zustand ist.

4. Schaltnetzteilvorrichtung nach Anspruch 1, wobei
der Transformator (T) ferner eine zweite Sekundärwicklung (ns2) aufweist, die erste Sekundärwicklung (ns1) und die zweite Sekundärwicklung (ns2) in Reihe geschaltet sind, und eine magnetische Polarität der ersten Primärwicklung (np) und der ersten Sekundärwicklung (ns1) und eine magnetische Polarität der ersten Primärwicklung (np) und der zweiten Sekundärwicklung (ns2) in Bezug auf eine Richtung von Strom, der fließt, wenn der erste Schaltkreis (S1) in einem leitenden Zustand ist oder der zweite Schaltkreis (S2) in einem leitenden Zustand ist, gleiche Polaritäten sind, und
die erste Gleichrichter-Glättungsschaltung eine Vollwellen-Gleichrichterschaltung mit Mittelabgriff, zumindest einen Filterinduktor (Lo), und zumindest einen Glättungskondensator (Co) aufweist.

5. Schaltnetzteilvorrichtung nach Anspruch 1, wobei der Transformator (T) ferner eine zweite Sekundärwicklung (ns2) aufweist, die erste Sekundärwicklung (ns1) und die zweite Sekundärwicklung (ns2) in Reihe geschaltet sind, und in Bezug auf eine Richtung eines Stroms, der fließt, wenn der erste Schaltkreis (S1) in einem leitenden Zustand ist oder der zweite Schaltkreis (S2) in einem leitenden Zustand ist, eine magnetische Polarität der ersten Primärwicklung (np) und der ersten Sekundärwicklung (ns1) eine umgekehrte Polarität ist, und eine magnetische Polarität der ersten Primärwicklung (np) und der zweiten Sekundärwicklung (ns2) eine gleiche Polarität ist, und
in der ersten Gleichrichterglättungsschaltung Kathodenseiten von Gleichrichterelementen mit beiden Endabschnitten der zweiten Sekundärwicklung (ns2) verbunden sind, Anodenseiten der Gleichrichterelemente einer gemeinsamen Verbindung unterliegen, ein Endabschnitt zumindest eines Filterinduktors (Lo) mit dem anderen Endabschnitt der ersten Sekundärwicklung (ns1) verbunden ist, und zumindest ein Glättungskondensator (Co) zwischen dem anderen Endabschnitt des Filterinduktors (Lo) und den Anoden der Gleichrichterelemente verbunden sind.

6. Schaltnetzteilvorrichtung nach einem der Ansprüche 1 bis 5, wobei ein primärseitiger Streufluss des Transformators (T) als Induktor (Lr) verwendet wird.

7. Schaltnetzteilvorrichtung nach einem der Ansprüche 1 bis 6, wobei ein sekundärseitiger Streufluss des Transformators (T) als Filterinduktor (Lo) verwendet wird.

8. Schaltnetzteilvorrichtung nach einem der Ansprüche 1 bis 7, wobei ein Wicklungsverhältnis zwischen der ersten Sekundärspule (ns1) und der zweiten Sekundärspule (ns2) 1:2 beträgt.

9. Schaltnetzteilvorrichtung nach einem der Ansprüche 1 bis 8, wobei der Transformator (T) ferner eine zweite Primärwicklung (nb) aufweist, ein Endabschnitt der zweiten Primärwicklung (nb) auf einer Seite geringen elektrischen Potentials der Gleichstromeingangs-Stromzufuhr (Vi) angeschlossen ist, und der andere Endabschnitt davon durch eine zweite Gleichrichterglättungsschaltung als Gleichstrom-Zufuhrspannung zugeführt wird, die für die Schaltsteuerschaltung verwendet wird.

10. Schaltnetzteilvorrichtung nach einem der Ansprüche 1 bis 9, wobei das Gleichrichterelement der ersten Gleichrichterglättungsschaltung ein Feldeffekttransistor ist.

11. Schaltnetzteilvorrichtung nach einem der Ansprüche 1 bis 10, wobei das Gleichrichterelement der ersten Gleichrichterglättungsschaltung einer An-Aus-Steuerung durch die Schaltsteuerschaltung unterzogen wird.

12. Schaltnetzteilvorrichtung, aufweisend:
eine Gleichstromzufuhr-Eingangseinheit, an der eine Gleichstrom-Eingangsspannung (Vi) eingegeben wird,
einen Induktor Lp, der durch ein magnetisches Bauteil ausgebildet ist,
einen ersten Schaltkreis (S1), der eine Parallelschaltung aus einem ersten Schaltelement (Q1), einem ersten Kondensator (C1), und einer ersten Diode (D1) aufweist, und
einen zweiten Schaltkreis (S2), der eine Parallelschaltung aus einem zweiten Schaltelement (Q2), einen zweiten Kondensator (C2), und einer zweiten Diode (D2) aufweist, wobei
eine Reihenschaltung, die den ersten Schaltkreis (S1) und den zweiten Schaltkreis (S2) aufweist, mit beiden Endabschnitten der Gleichstromzufuhr-Eingangseinheit verbunden ist,
die Schaltnetzteilvorrichtung eingerichtet ist, so dass ein Endabschnitt des Induktors (Lp) mit einem Verbindungspunkt zwischen dem ersten Schaltkreis (S1) und dem zweiten Schaltkreis (S2) verbunden ist, und von dem anderen Endabschnitt davon eine Ausgangsspannung Vout durch einen dritten Kondensator (Co), der mit dem ersten Schaltkreis (S1) parallel geschaltet ist, ausgegeben wird, und
der erste Schaltkreis (S1) und der zweite Schaltkreis (S2) eingerichtet sind, zu arbeiten, so dass der erste Schaltkreis (S1) und der zweite Schaltkreis (S2) komplementär ein Ein- und Ausschalten mit einer zwischen ihnen liegenden Zeitperiode wiederholen, in der sowohl der erste Schaltkreis (S1) als auch der zweite Schaltkreis (S2) ausgeschaltet sind, wobei die Schaltnetzteilvorrichtung aufweist:
erste Überwachungssignal-Erzeugungsmittel zur Detektion der Änderung einer Spannung oder Stromstärke in der Stromwandlerschaltung, die aufgrund des Ausschaltens eines Schaltkreises in einem Ein-Zustand unter dem ersten Schaltkreis (S1) und dem zweiten Schaltkreis (S2) auftritt, und Erzeugen eines Überwachungssignals;
Ausgangsspannungs-Detektionsmittel zur Detektion der Ausgangsspannung (Vout);
Rückkopplungssignal-Erzeugungsmittel zur Erzeugung eines Rückkopplungssignals gemäß der Ausgangsspannung (Vout), die von dem Ausgangsspannungs-Detektionsmittel detektiert wird; und
eine Schaltsteuerschaltung, die das erste Schaltelement (Q1) und das zweite Schaltelement (Q2) steuern, **dadurch gekennzeichnet, dass** die Schaltsteuerschaltung einen Oszillator aufweist, der eine Dreieckwelle erzeugt, deren Frequenz einstellbar und nahezu konstant ist,
einen ersten Komparator, der das Dreieckwellensignal mit dem Rückkopplungssignal vergleicht, und einen zweiten Komparator, der ein Ausgangssignal des ersten Überwachungssignal-Erzeugungsmittels mit einem ersten Grenzwert vergleicht, wobei ein Gate-Signal des ersten Schaltkreises (S1) und ein Gate-Signal des zweiten Schaltkreises (S2) auf Grundlage der Ausgaben des ersten Komparators und des zweiten Komparators erzeugt werden, wobei das Rückkopplungssignal verwendet wird, den Ausschaltzeitpunkt gemäß dem Pegel der Ausgangsspannung (Vout) zu erhalten,
und die Schaltsteuerschaltung eingerichtet ist, eine erstes Schaltsteuersignal (Vgs1) und ein zweites Schaltsteuersignal (Ts) zu erzeugen, so dass ein gewünschter Ausgangsspannungspegel erhalten wird.

13. Schaltnetzteilvorrichtung nach einem der Ansprüche 1 bis 12, wobei die Schaltsteuerschaltung ferner einen dritten Komparator aufweist, der ein Ausgangssignal des ersten Überwachungssignal-Erzeugungsmittels mit einem zweiten Grenzwert vergleicht, wobei das Gate-Signal des ersten Schaltkreises (S1) auf Grundlage der Ausgaben des ersten Komparators und des zweiten Komparators erzeugt wird, und das Gate-Signal des zweiten Schaltkreises (S2) auf Grundlage der Ausgaben des ersten Komparators und des dritten Komparators erzeugt wird.

14. Schaltnetzteilvorrichtung nach einem der Ansprüche 1 bis 13, wobei durch Ersetzen des zweiten Komparators und des dritten Komparators durch einen Hysterese-Komparators, der erste Grenzwert und der zweite Grenzwert festgelegt werden.

15. Schaltnetzteilvorrichtung nach einem der Ansprüche 1 bis 14, wobei ein Maximalwert einer Ein-Zeit einer Pulsbreite von einem Zeitpunkt, wenn ein Signal zum Einschalten an dem ersten Schaltelement (Q1) oder dem zweiten Schaltelement (Q2) ausgegeben wird, bis zu einem Zeitpunkt, wenn ein Ausgangssignal zum Ausschalten des entsprechenden Schaltelements erzeugt wird, auf weniger als eine Periode des Oszillators beschränkt ist, der die Dreieckwelle erzeugt.

16. Schaltnetzteilvorrichtung nach einem der Ansprüche 1 bis 15, wobei ein Strom, der durch den Transformator (T) oder den Induktor (Lp) in der Stromwandlerschaltung fließt, oder ein Strom, der durch ein Schaltelement fließt, detektiert wird, und durch Beschränken eines Maximalwerts der Ein-Zeit ein Überstrom vermieden wird.

17. Schaltnetzteilvorrichtung nach einem der Ansprüche 1 bis 16, wobei der erste Schaltkreis (S1) oder der zweite Schaltkreis (S2) ein Feldeffekttransistor ist.

18. Schaltnetzteilvorrichtung nach einem der Ansprüche 1 bis 17, wobei der erste Schaltkreis (S1) oder der zweite Schaltkreis (S2) vermittels Zero-Voltage-Switching betrieben wird, bei dem, nachdem Spannungen von beiden Endabschnitten des Schaltkreises auf 0 V oder die Nähe von 0 V abgefallen sind, das Schaltelement (Q1) oder (Q2) eingeschaltet wird.

19. Schaltnetzteilvorrichtung nach einem der Ansprüche 1 bis 18, wobei das erste Überwachungssignal-Erzeugungsmittel ein Stromtransformator ist, der zur Detektion eines Stroms verwendet wird, der durch den Induktor (Lr) fließt.

20. Schaltnetzteilvorrichtung nach einem der Ansprüche 1 bis 19, wobei das erste Überwachungssignal-Erzeugungsmittel die Änderung einer Drain-Source-Spannung des ersten Schaltelements (Q1) und/oder des zweiten Schaltelements (Q2) verwendet.

21. Schaltnetzvorrichtung nach einem der Ansprüche 1 bis 20, wobei das erste Überwachungssignal-Erzeugungsmittel die Änderung der Drain-Source-Stromstärke des ersten Schaltelements (Q1) und/oder des zweiten Schaltelements (Q2) verwendet.

22. Schaltnetzteilvorrichtung nach einem der Ansprüche 1 bis 21, wobei das erste Überwachungssignal-Erzeugungsmittel die Änderung einer Spannung verwendet, die zwischen beiden Endabschnitten der zweiten Primärwicklung (nb) entsteht.

## Revendications

1. Appareil d'alimentation électrique à découpage, incluant
une unité d'entrée d'alimentation électrique en courant continu dans laquelle une tension d'entrée de courant continu (Vi) est entrée ;
un transformateur (T) étant configuré par un composant magnétique et incluant au moins un premier enroulement primaire (np) et un premier enroulement secondaire (ns1), couplés sur le plan magnétique;
une bobine d'induction (Lr) montée en série avec le premier enroulement primaire (np),
un premier circuit de commutation (S1) incluant un circuit parallèle d'un premier élément de commutation (Q1), un premier condensateur (C1), et une première diode (D1) ;
un second circuit de commutation (S2) incluant un circuit parallèle d'un second élément de commutation (Q2), un deuxième condensateur (C2), et une seconde diode (D2) ;
un troisième condensateur (Cr) ;
un premier circuit série, lequel est connecté aux deux portions d'extrémité de l'unité d'entrée d'alimentation électrique en courant continu, et où le premier enroulement primaire (np) et le premier circuit de commutation (S1) sont montés en série, et
un second circuit série, lequel est connecté aux deux portions d'extrémité du premier circuit de commutation (S1) ou aux deux portions d'extrémité du premier enroulement (np), et où le second circuit de commutation (S2) et le troisième condensateur (Cr) sont montés en série, dans lequel le premier circuit de commutation (S1) et le second circuit de commutation (S2) sont configurés pour fonctionner de sorte que le premier circuit de commutation (S1) et le second circuit de commutation (S2) répètent de manière complémentaire le blocage et déblocage avec une période de temps entre ceux-ci, durant laquelle le premier circuit de commutation (S1) et le second circuit de commutation (S2) sont tous deux bloquants, et
l'appareil d'alimentation électrique à découpage inclut un circuit de conversion de puissance configuré de manière à ce que la tension de sortie (Vout) soit produite vers un côté secondaire par le biais d'un premier circuit de lissage et de redressement redressant et lissant une tension alternative produite à partir du premier enroulement secondaire (ns1), l'appareil d'alimentation électrique à découpage comprenant :
un premier moyen de génération de signal de surveillance pour détecter le changement d'une tension ou d'un courant dans le circuit de conversion de puissance, lequel se produit suite au blocage d'un circuit de commutation dans un état passant parmi le premier circuit de commutation (S1) et le second circuit de commutation (S2), et pour générer un signal de surveillance ;
un moyen de détection de tension de sortie pour détecter la tension de sortie (Vout) ;
un moyen de génération de signal de réaction pour générer un signal de réaction conformément à la tension de sortie (Vout) détectée par le moyen de détection de tension de sortie, et
un circuit de commande de commutation commandant le premier élément de commutation (Q1) et le second élément de commutation (Q2), **caractérisé en ce que** le circuit de commande de commutation inclut un oscillateur générant une onde triangulaire dont la fréquence peut être réglée et est presque constante ;
un premier comparateur comparant le signal d'onde triangulaire avec le signal de réaction, et un deuxième comparateur comparant un signal de sortie du premier moyen de génération de signal de surveillance avec une première valeur seuil, dans lequel un signal de grille du premier circuit de commutation (S1) et un signal de grille du second circuit de commutation (S2) sont générés sur la base de sorties du premier comparateur et du deuxième comparateur,
dans lequel
le signal de réaction est utilisé pour obtenir une temporisation de blocage conformément au niveau de la tension de sortie (Vout), et le circuit de commande de commutation est agencé de manière à générer un premier signal de commande de commutation (Vgs1) et un second signal de commande de commutation (Vgs2) avec maintien d'une période de commutation constante (Ts), de manière à obtenir un niveau de tension de sortie souhaité.

2. Appareil d'alimentation électrique à découpage selon la revendication 1, dans lequel
une polarité magnétique du premier enroulement primaire (np) et du premier enroulement secondaire (ns1) est une polarité inverse par rapport à une direction d'un courant circulant lorsque le premier circuit de commutation (S1) se trouve dans un état de conduction ou lorsque le second circuit de commutation (S2) se trouve dans un état de conduction.

3. Appareil d'alimentation électrique à découpage selon la revendication 1, dans lequel
une polarité magnétique du premier enroulement primaire (np) et du premier enroulement secondaire (ns1) est de polarité identique par rapport à une direction d'un courant circulant lorsque le premier circuit de commutation (S1) se trouve dans un état de conduction ou lorsque le second circuit de commutation (S2) se trouve dans un état de conduction.

4. Appareil d'alimentation électrique à découpage selon la revendication 1, dans lequel
le transformateur (T) inclut en outre un second enroulement secondaire (ns2) ; le premier enroulement secondaire (ns1) et le second enroulement secondaire (ns2) sont montés en série, et une polarité magnétique du premier enroulement primaire (np) et du premier enroulement secondaire (ns1) ainsi qu'une polarité magnétique du premier enroulement primaire (np) et du second enroulement secondaire (ns2) sont des polarités identiques par rapport à une direction d'un courant circulant lorsque le premier circuit de commutation (S1) se trouve dans un état de conduction ou lorsque le second circuit de commutation (S2) se trouve dans un état de conduction, et
le premier circuit de lissage et de redressement inclut un circuit redresseur à deux alternances de type prise médiane, au moins une bobine d'induction de filtrage (Lo), et au moins un condensateur de lissage (Co).

5. Appareil d'alimentation électrique à découpage selon la revendication 1, dans lequel
le transformateur (T) inclut en outre un second enroulement secondaire (ns2) ; le premier enroulement secondaire (ns1) et le second enroulement secondaire (ns2) sont montés en série, et une polarité magnétique du premier enroulement primaire (np) et du premier enroulement secondaire (ns1) est une polarité inverse, et une polarité magnétique du premier enroulement primaire (np) et du second enroulement secondaire (ns2) est de polarité identique, par rapport à une direction d'un courant circulant lorsque le premier circuit de commutation (S1) se trouve dans un état de conduction ou lorsque le second circuit de commutation (S2) se trouve dans un état de conduction, et dans le premier circuit de lissage et de redressement, des côtés cathode des éléments redresseurs sont respectivement connectés aux deux portions d'extrémité du second enroulement secondaire (ns2) ; des côtés anode des éléments redresseurs sont soumis à une connexion commune, une portion d'extrémité d'au moins une bobine d'induction de filtrage (Lo) est connectée à l'autre portion d'extrémité du premier enroulement secondaire (ns1), et au moins un condensateur de lissage (Co) est connecté entre l'autre portion d'extrémité de la bobine d'induction de filtrage (Lo) et les anodes des éléments redresseurs.

6. Appareil d'alimentation électrique à découpage selon l'une quelconque des revendications 1 à 5, dans lequel
un flux de fuite côté primaire du transformateur (T) est utilisé comme bobine d'induction (Lr).

7. Appareil d'alimentation électrique à découpage selon l'une quelconque des revendications 1 à 6, dans lequel
un flux de fuite côté secondaire du transformateur (T) est utilisé comme bobine d'induction de filtrage (Lo).

8. Appareil d'alimentation électrique à découpage selon l'une quelconque des revendications 1 à 7, dans lequel
un rapport des spires entre le premier enroulement secondaire (ns1) et le second enroulement secondaire (ns2) est de 1 : 2.

9. Appareil d'alimentation électrique à découpage selon l'une quelconque des revendications 1 à 8, dans lequel
le transformateur (T) inclut en outre un second enroulement primaire (nb) ; une portion d'extrémité du second enroulement primaire (nb) est connectée sur un côté de potentiel électrique bas de l'alimentation électrique d'entrée en courant continu (Vi), et l'autre portion d'extrémité de celui-ci est fournie sous la forme d'une tension d'alimentation électrique en courant continu utilisée pour le circuit de commande de commutation par le biais d'un second circuit de lissage et de redressement.

10. Appareil d'alimentation électrique à découpage selon l'une quelconque des revendications 1 à 9, dans lequel
l'élément redresseur du premier circuit de lissage et de redressement est un transistor à effet de champ.

11. Appareil d'alimentation électrique à découpage selon l'une quelconque des revendications 1 à 10, dans lequel
l'élément redresseur du premier circuit de lissage et de redressement est soumis à une commande de blocage/déblocage par le circuit de commande de commutation.

12. Appareil d'alimentation électrique à découpage, incluant :
une unité d'entrée d'alimentation électrique en courant continu dans laquelle une tension d'entrée de courant continu (Vi) est entrée ;
une bobine d'induction Lp configurée par un composant magnétique ;
un premier circuit de commutation (S1) incluant un circuit parallèle d'un premier élément de commutation (Q1), un premier condensateur (C1), et une première diode (D1), et
un second circuit de commutation (S2) incluant un circuit parallèle d'un second élément de commutation (Q2), un deuxième condensateur (C2), et une seconde diode (D2) ; dans lequel
un circuit série, incluant le premier circuit de commutation (S1) et le second circuit de commutation (S2), est connecté aux deux portions d'extrémité de l'unité d'entrée d'alimentation électrique en courant continu, et
l'appareil d'alimentation électrique à découpage est configuré de manière à ce que une portion d'extrémité de la bobine d'induction (Lp) soit connectée à un point de connexion entre le premier circuit de commutation (S1) et le second circuit de commutation (S2), et à ce que, à partir de l'autre portion d'extrémité de celui-ci, une tension de sortie Vout soit produite par le biais d'un troisième condensateur (Co) monté en parallèle avec le premier circuit de commutation (S1), et
le premier circuit de commutation (S1) et le second circuit de commutation (S2) sont configurés pour fonctionner de sorte que le premier circuit de commutation (S1) et le second circuit de commutation (S2) répètent de manière complémentaire le blocage et déblocage avec une période de temps entre ceux-ci, durant laquelle le premier circuit de commutation (S1) et le second circuit de commutation (S2) sont tous deux bloquants, l'appareil d'alimentation électrique à découpage comprenant :
le premier moyen de génération de signal de surveillance pour détecter le changement d'une tension ou d'un courant dans le circuit de conversion de puissance, lequel se produit suite au blocage d'un circuit de commutation dans un état passant parmi le premier circuit de commutation (S1) et le second circuit de commutation (S2), et pour générer un signal de surveillance ;
un moyen de détection de tension de sortie pour détecter la tension de sortie (Vout) ;
un moyen de génération de signal de réaction pour générer un signal de réaction conformément à la tension de sortie (Vout) détectée par le moyen de détection de tension de sortie, et
un circuit de commande de commutation commandant le premier élément de commutation (Q1) et le second élément de commutation (Q2), **caractérisé en ce que** le circuit de commande de commutation inclut un oscillateur générant une onde triangulaire dont la fréquence peut être réglée et est presque constante ;
un premier comparateur comparant le signal d'onde triangulaire avec le signal de réaction, et un deuxième comparateur comparant un signal de sortie du premier moyen de génération de signal de surveillance avec une première valeur seuil, dans lequel un signal de grille du premier circuit de commutation (S1) et un signal de grille du second circuit de commutation (S2) sont générés sur la base de sorties du premier comparateur et du deuxième comparateur,
dans lequel
le signal de réaction est utilisé pour obtenir une temporisation de blocage conformément au niveau de la tension de sortie (Vout), et le circuit de commande de commutation est agencé de manière à générer un premier signal de commande de commutation (Vgs1) et un second signal de commande de commutation (Vgs2) avec maintien d'une période de commutation constante (Ts), de manière à obtenir un niveau de tension de sortie souhaité.

13. Appareil d'alimentation électrique à découpage selon l'une quelconque des revendications 1 à 12, dans lequel
le circuit de commande de commutation inclut en outre un troisième comparateur comparant un signal de sortie du premier moyen de génération de signal de surveillance avec une seconde valeur seuil, dans lequel un signal de grille du premier circuit de commutation (S1) est généré sur la base des sorties du premier comparateur et du second comparateur, et le signal de grille du second circuit de commutation (S2) est généré sur la base des sorties du premier comparateur et du troisième comparateur.

14. Appareil d'alimentation électrique à découpage selon l'une quelconque des revendications 1 à 13, dans lequel
en remplaçant le premier comparateur et le troisième comparateur par un comparateur d'hystérésis, la première valeur seuil et la seconde valeur seuil sont spécifiées.

15. Appareil d'alimentation électrique à découpage selon l'une quelconque des revendications 1 à 14, dans lequel
une valeur maximale d'un temps d'état passant d'une largeur d'impulsion, depuis un temps où est produit un signal pour passer sur l'état passant un élément parmi le premier élément de commutation (Q1) et le second élément de commutation (Q2) jusqu'à un temps où est généré un signal de sortie pour passer sur l'état bloquant l'élément de commutation correspondant, est restreint à moins d'une période de l'oscillateur générant l'onde triangulaire.

16. Appareil d'alimentation électrique à découpage selon l'une quelconque des revendications 1 à 15, dans lequel
un courant circulant à travers le transformateur (T) ou la bobine d'induction (Lp) dans le circuit de conversion de puissance ou un courant circulant à travers un élément de commutation est détecté, et en restreignant une valeur maximale du temps d'état passant, la circulation d'une surintensité est empêchée.

17. Appareil d'alimentation électrique à découpage selon l'une quelconque des revendications 1 à 16, dans lequel le premier circuit de commutation (S1) ou le second circuit de commutation (S2) est un transistor à effet de champ.

18. Appareil d'alimentation électrique à découpage selon l'une quelconque des revendications 1 à 17, dans lequel
le premier circuit de commutation (S1) ou le second circuit de commutation (S2) est excité par un fonctionnement de commutation de tension nulle, où après diminution des tensions des deux portions d'extrémité du circuit de commutation à 0 V ou dans le voisinage de 0 V, l'élément de commutation (Q1) ou (Q2) devient passant.

19. Appareil d'alimentation électrique à découpage selon l'une quelconque des revendications 1 à 18, dans lequel
le premier moyen de génération de signal de surveillance est un transformateur de courant utilisé pour détecter un courant circulant à travers la bobine d'induction (Lr).

20. Appareil d'alimentation électrique à découpage selon l'une quelconque des revendications 1 à 19, dans lequel
le premier moyen de génération de signal de surveillance utilise le changement d'une tension drain-source d'au moins un élément parmi le premier élément de commutation (Q1) et le second élément de commutation (Q2).

21. Appareil d'alimentation électrique à découpage selon l'une quelconque des revendications 1 à 20, dans lequel
le premier moyen de génération de signal de surveillance utilise le changement d'une tension drain-source d'au moins un élément parmi le premier élément de commutation (Q1) et le second élément de commutation (Q2).

22. Appareil d'alimentation électrique à découpage selon l'une quelconque des revendications 1 à 21, dans lequel
le premier moyen de génération de signal de surveillance utilise le changement d'une tension se produisant entre les deux portions d'extrémité du second enroulement primaire (nb).
